# EUROPEAN PATENT SPECIFICATION

(11) **EP 4 017 247 B1**
(45) Date of publication and mention of the grant of the patent: **18.11.2026**
(21) Application number: 20871216.6
(22) Date of filing: 13.07.2020
(51) Int. Cl.: A01C 15/04, A01C 15/12, A01C 7/08

(54) **AIR-BOOM SPREADER FOR PARTICULATE MATERIAL**
LUFTAUSLEGERVERTEILER FÜR PARTIKELFÖRMIGES MATERIAL
ÉPANDEUR PNEUMATIQUE À RAMPE DESTINÉ À UNE MATIÈRE PARTICULAIRE

(30) Priority: 30.09.2019 US 201962908132 P
(43) Date of publication of application: 29.06.2022
(73) Proprietor: Salford Group Inc., Salford, Ontario N0J 1W0 (CA)
(72) Inventor: GRAY, Geof J, Burfurd, Ontario N0E 1A0 (CA); AVERINK, John Mark, Norwich, Ontario N0J 1P0 (CA); BAKER, Bradley William, Stratford, Ontario N5A 5B9 (CA); DYCK, Jesse Abram, London, Ontario N5Y 4M5 (CA); PASMA, Chad Derek, Beachville, Ontario N0J 1A0 (CA); GOVEIA, Simon, Mossley, Ontario N0L 1V0 (CA); POPPE, Christopher Michael, Mitchell, Ontario N0K 1N0 (CA); STRAATMAN, Troy Michael, Alvinston, Ontario N0N 1A0 (CA); LEHMAN, Adam Peter, Kenilworth, Ontario N0G 2E0 (CA)
(74) Representative: Swea IP Law AB
(86) International application number: PCT/CA2020/050970
(87) International publication number: WO 2021/062520

(56) References cited:
- WO-A1-2018/170594
- CA-A1- 3 010 384
- DE-A1- 3 819 121

## Description

### Field

This application relates to agriculture, in particular to an air-boom spreader for applying solid agricultural product to a field.

### Background

In modern agriculture, many crops (e.g. corn) are often planted by seeding a field with seed in evenly-spaced parallel rows. Seeding a field generally involves towing a seeding implement behind a towing vehicle (e.g. a tractor) such that the wheels of the towing vehicle and the wheels of the seeding implement follow the same path, and the seeds are planted in crop rows spaced-apart by a distance such that the wheels are between crop rows. The seeding implement generally has a plurality of transversely spaced-apart seed outlets so that a plurality of crop rows may be planted at the same time in a single swath as the towing vehicle drives in a driving line in one direction on the field. Currently, all such seeding implements comprise an even number of seed outlets, for example 12, 16, 18, 24, 36, 48, etc. seed outlets. When the towing vehicle and the seeding implement arrive at the end of the field, the towing vehicle and the seeding implement are shifted over and driven in a new driving line in the opposite direction to plant another swath of crop rows. The new driving line is chosen so that the spacing between all of the parallel crop rows in the field remains constant across the field. The new driving line is determined based on the location in the field of the previous driving line and on the number and spacing of seed outlets on the seeding implement. The driving lines may be stored as coordinates in a global positioning system (GPS) for future reference and/or for automating the planting.

After planting, it is often desirable to apply post-planting product (e.g. fertilizer, micronutrients, etc. or mixtures thereof) in between the crop rows (i.e. mid-rows). A different implement but the same towing vehicle are often used for application of post-planting product. Because axle width of the towing vehicle remains unchanged, to avoid driving on the crop rows during post-planting product application, the towing vehicle is driven on the same driving lines as was driven during planting. In order to apply post-planting product between the crop rows under such conditions, the implement used to apply post-planting product has a plurality of product outlets spaced-apart by substantially the same or a similar distance as the seed outlets on the seeding implement, but the outlets on the post-planting implement are transversely offset with respect to a centerline of the towing vehicle by an amount equal to about half the spacing distance. Alternative to towing a post-planting implement, a self-propelled vehicle may be used to apply post-planting product to the field. Nevertheless, the self-propelled vehicle should drive between rows and it is desirable for the self-propelled vehicle to drive on the same rows as the towing vehicle that towed the seeding implement in order to prevent excessive compaction. Such a practice is called tramlining where all traffic drives in same rows as much as possible.

Unfortunately, such a practice results in some mid-rows receiving twice the desired amount of post-planting product, or some mid-rows receiving no post-planting product, or some mid-rows receiving twice the desired amount of post-planting product and others receiving none. The problem could be mitigated by shifting every second driving line during application of the post-planting product. However, shifting every second driving line is generally undesirable due to the difficulty in feeding from a fixed set of endless belts or meter rollers into a sluiced metering device and having a moveable boom to switch between rows. Such a solution requires many more moving parts, which can jam, wear out from movement and experience other problems associated with moving parts.

Recently, an apparatus and method have been developed in which the outlets of a particulate material spreader are configured to receive the particulate material from a metering device and to dispense an amount of the particulate material to mid-rows between crop rows on a field such that the plurality of outlets dispenses half the amount of particulate material to an outermost mid-row compared to the amount of particulate material dispensed to the other mid-rows (see International Patent Publication WO 2018/170594 published September 27, 2018).

Such a configuration permits delivering the same amount of particulate material to each mid-row as the towing vehicle tramlines through a field. However, in air-boom spreaders with a configuration of air lines as shown in WO 2018/170594, as the total span of the boom exceeds 60 feet (about 18.5 meters), insufficient distribution of particulate material to certain outlets, e.g. the outermost outlets, may occur at the typical particle distribution rates and vehicle speeds used, i.e. 400 Ib/acre (0.045 kg/m²) at 14 mph (22.5 km/h) or 560 Ib/acre (0.063 kg/m²) at 10 mph (16.1 km/h). A goal of using longer booms (e.g. 90-foot total boom span) (about 27.5 meters).is to distribute particulate material at a higher rate, e.g. 1200 Ib/acre (0.135 kg/m²) at a vehicle speed of 10 mph (16.1 km/h), in order to perform broadcasting and row cropping. However, increasing the particle distribution rate in such a way may also lead to line plugging, particularly at the innermost outlets, when a boom having a total span in excess of 60 feet (about 18.5 meters) is used.

There still remains a need for a post-planting implement, particularly an air-boom spreader with a total boom span of greater than 60 feet (about 18.5 meters), and a method for applying the same amount of a particulate material to all the mid-rows between crop rows while the spreader is driven on the same driving lines used for planting the crop rows.

DE3819121A1 discloses a plurality of discharge members arranged transversely to the direction of travel and used at the spacing of the crop rows, with the tractor track serving as a tramline for subsequent cultivation operations, such as fertilisation. An apparatus for the distribution of fertiliser in such a cultivation of row crops consists of a tractor and of a spreader received or drawn by the latter and having a fertiliser container and a plurality of spreading members which are arranged transversely to the direction of travel at an approximately equal spacing and which spread out between the plant rows the fertiliser fed to them from the container in a respective metered quantity. In order to use the tramlines made available by the sowing for fertilisation and to allow satisfactory swath connection during fertilisation, with n discharge members on the seed drill the spreader has (a · n + 1) spreading members, a being a whole number. Furthermore, a fertiliser quantity m is fed to the two outermost spreading members and the fertiliser quantity 2m is fed to all the spreading members located between them.

### Summary

According to the invention as defined by claim 1 there is provided an air-boom spreader for spreading particulate material to mid-rows between crop rows on a field, the spreader comprising: a hopper for containing the particulate material; a metering device configured to receive the particulate material from the hopper; a plurality of outlets transversely spaced-apart on a boom in a direction substantially non-parallel to a direction of travel of the spreader and configured to receive the particulate material from the metering device and to dispense the particulate material to the mid-rows, the plurality of outlets comprising a pair of distal-most outlets in relation to the metering device, the pair of distal-most outlets comprising an outermost outlet and a penultimate outlet, an innermost outlet in relation to the metering device, and a pair of interior outlets situated on the boom between the pair of distal-most outlets and the innermost outlet; and, a plurality of air lines connecting the metering device to the plurality of outlets for conveying the particulate material in an air stream to the plurality of outlets, the plurality of air lines comprising a first air line connecting the metering device to the pair of distal-most outlets, the metering device supplying 1.5 units of the particulate material to the first air line, the first air line configured to convey one-third of the 1.5 units of the particulate material to the outermost outlet and two-thirds of the 1.5 units of the particulate material to the penultimate outlet, a second air line connecting the metering device to the innermost outlet and the pair of interior outlets, the metering device supplying 2.5 units of the particulate material to the second air line, the second air line configured to convey one-fifth of the 2.5 units of the particulate material to the innermost outlet and two-fifths of the 2.5 units of the particulate material to each outlet of the pair of interior outlets.

Further embodiments of the invention are defined by the dependent claims.

Further features will be described or will become apparent in the course of the following detailed description.

### Brief Description of the Drawings

For clearer understanding, preferred embodiments will now be described in detail by way of example, with reference to the accompanying drawings, in which:
Fig. 1 depicts a rear perspective view of one embodiment of an air-boom spreader of the present invention;
Fig. 2 depicts the spreader of Fig. 1 without drop tubes;
Fig. 3A depicts a magnified rear perspective view of a central portion of the spreader of Fig. 2;
Fig. 3B depicts a magnified rear perspective view of a central portion of the spreader of Fig. 2 without sluice boxes;
Fig. 3C depicts a magnified side view of a cut-away of a rear portion of the spreader of Fig. 2;
Fig. 4 depicts a top front perspective view of sluice boxes and air manifold of the spreader of Fig. 2;
Fig. 5 depicts a bottom front perspective view of Fig. 4;
Fig. 6 depicts a top rear perspective view of sluice boxes and air manifold of the spreader of Fig. 2 without upper funnel portions on the sluice boxes;
Fig. 7 depicts a top front perspective view of Fig. 6;
Fig. 8 depicts a rear view of Fig. 6;
Fig. 9 depicts a bottom view of Fig. 6;
Fig. 10 depicts a top view of Fig. 6;
Fig. 11 depicts a front view of Fig. 6;
Fig. 12 depicts a sectional view through **A-A** in Fig. 11 at a scale of 1:12;
Fig. 13 depicts a magnified view of a central portion of Fig. 12;
Fig. 14 depicts a magnified view of a just-off-center portion of Fig. 12;
Fig. 15 depicts a rear sectional view taken vertically through the sluice boxes and air manifold depicted in Fig. 4;
Fig. 16 depicts a bottom view of a left side of a boom of the spreader of Fig. 2 at a scale of 1:56;
Fig. 17 depicts a magnified bottom sectional view of a left side distal end of the boom depicted in Fig. 16;
Fig. 18 depicts a bottom view of a central portion of an air-boom spreader having an alternate embodiment of an air manifold; and,
Fig. 19 depicts a magnified view of a cross-section of a just-off-center portion of the air-boom spreader of Fig. 18.

### Detailed Description

The present disclosure provides an air-boom spreader and a method for applying the same amount of a particulate material to all mid-rows between crop rows in a field while the spreader is tramlining in the field; that is, while the spreader is being driven in the field on the same driving lines used for planting the crop rows. The air-boom spreader works well for all boom spans, even booms with a total boom span of greater than 60 feet (about 18.5 meters), for example a boom span between 80 feet and 100 feet (e.g. 90 feet) (about 24.5 meters and 30.5 meters (e.g. 27.5 meters). The particulate material may be a solid agricultural product, for example fertilizer, a micronutrient, a granular herbicide, a cover crop seed for interrow seeding or any mixture thereof. The particulate material is preferably a post-planting product.

The spreader may be self-propelled, mounted on a prime mover (e.g. a truck or tractor) or towed behind a prime mover. The spreader comprises a hopper for containing the particulate material, a metering device for receiving the particulate material from the hopper, a boom, a plurality of outlets transversely spaced-apart on the boom in a direction perpendicular to the direction of travel of the spreader and a plurality of air lines connecting the metering device to the plurality of outlets so that the particulate material can be conveyed from the metering device to the plurality outlets to be dispensed to the mid-rows between the crop rows in the field. The spreader may further comprise a blower in fluid communication with the plurality of air lines for providing an air stream in the plurality of air lines to convey the particulate material through the air lines.

The boom is extendible transversely from metering device substantially non-parallel to a direction of travel of the spreader and substantially non-perpendicular to the field. The boom may comprise one or more than one boom section. The boom may be transversely extendible to one or both sides of spreader in opposite transverse directions from the spreader.

The metering device preferably comprises a metering element and a plurality of sluices, the metering element receiving the particulate material from the hopper and the plurality of sluices receiving the particulate material from the metering element. The plurality of sluices is preferably housed in a sluice box. The metering device may comprise one or more metering elements. The metering device may comprise one or more plurality of sluices. In some embodiments, the metering device may comprise two or more metering elements. In some embodiments, the metering device may comprise two or more plurality of sluices. Where the metering device comprises more than one metering element, the metering elements may be controlled together to supply the particulate material to sluice boxes at the same rate, or may be independently controllable to independently supply the particulate material to sluice boxes at the same rate or at different rates as desired, each sluice box housing its own plurality of sluices. For example, one or more metering elements may be turned completely off while one or more other metering elements may be on.

The metering element may comprise an endless belt or a set of meter rollers. Where there is more than one metering element, the metering elements may be the same type or different types of metering elements. Endless belts may be independently controllable using dedicated motors, while sets of meter rollers may be independently controllable using dedicated clutches to engage and disengage the sets of meter rollers.

The plurality of outlets comprises a minimum of five outlets including an innermost outlet, an outermost outlet and at least three other outlets between the innermost outlet and the outermost outlet. The innermost outlet and the outermost outlet are supplied with half as much of the particulate material as the at least three other outlets so that while tramlining in the field, the spreader can dispense the same amount of the particulate material to all of the mid-rows. The innermost outlet is preferably over a mid-row on a central travel line of the spreader, while the outermost outlet is over an outermost mid-row while the spreader is being driven in the field.

It is of special note that there are more than twice as many outlets as there are sluices. Thus, each sluice supplies the particulate material to at least two of the plurality of outlets. It has been found that supplying the outermost outlet and a penultimate outlet with particulate material from the same sluice, and by supplying the innermost outlet and a pair of interior outlets from the same sluice, the spreader is configured to evenly distribute the particulate material to the outlets at both the distal and proximal ends of the boom without plugging the air lines at the proximal end. The three other outlets thus comprise the pair of interior outlets and the penultimate outlet, and the pair of interior outlets are between the penultimate outlet and the innermost outlet. Such an arrangement permits using a longer boom (e.g. greater than 60 feet total span) (about 18.5 meters) without unduly affecting the evenness of particulate material distribution along the entire span of the boom so that each mid-row always receives the same amount of particulate material.

In order for the sluices to supply more than one outlet, the air lines leading from the sluices to the outlets are provided with flow dividers. Flow dividers for particulate materials in air lines are generally known in the art. In the present spreader, a first flow divider in a first air line that conveys 1.5 units of the particulate from an outermost-supplying sluice to the outermost and penultimate outlets is used to divide the 1.5 units of the particulate into a one-third portion and a two-thirds portion, the one-third portion being conveyed to the outermost outlet and the two-thirds portion being conveyed to the penultimate outlet so that the outermost outlet dispenses 0.5 units of the particulate material while the penultimate outlet dispenses 1 unit of the particulate material. Further, second and third flow dividers in a second air line that conveys 2.5 units of the particulate from another sluice to the innermost outlet and the pair of interior outlets are used to properly divide the particulate material. The second flow divider divides the 2.5 units of the particulate material into a one-fifth portion conveyed to the innermost outlet and a four-fifths portion conveyed to the pair of interior outlets. The third flow divider divides the four-fifths portion into two two-fifths portions to each of the outlets of the pair of interior outlets. In this manner, the innermost outlet dispenses 0.5 units of the particulate material while each of the outlets of the pair of interior outlets dispenses 1 unit of the particulate material.

Where the boom is extendible to both sides of the spreader in the opposite transverse directions from the spreader, the innermost outlet may be termed a center outlet. In such an arrangement, a first centrally-extending air line supplied by a first centrally-supplying sluice of the first sluice box and a second centrally-extending air-line supplied by a second centrally-supplying sluice of the second sluice box both convey particulate material to the center outlet so that the center outlet dispenses 1 unit of the particulate material to the mid-row on the central travel line of the spreader.

In addition to at least three other outlets (i.e. the penultimate outlet and the pair of interior outlets), the plurality of outlets preferably further comprises at least one further pair of other outlets situated on the boom. The at least one further pair of other outlets may be situated between the pair of interior outlets and the penultimate outlet or between the pair of interior outlets and the innermost outlet. However, for efficient use of the air lines, the at least one further pair of other outlets is preferably situated between the pair of interior outlets and the penultimate outlet.

The total number of sluices and outlets depends on the desired boom span. Preferably, the spreader comprises a total of at least 7 sluices and 15 outlets. In one embodiment, the spreader comprises a total of at least 8 sluices and 17 outlets. In other embodiments, especially where the boom is extendible to both transverse sides of the spreader, the spreader comprises a total of at least 16 sluices and 33 outlets, or a total of 18 sluices and the plurality of outlets comprises a total of 37 outlets.

The use of the term "unit" throughout the specification refers to a single quantity regarded as a whole for the amount of particulate material that is desired to be dispensed through one outlet in order to deliver the particulate material at a desired rate (i.e. weight per area) to each mid-row in the field in a single pass. Further, each individual outlet could be arranged as a plurality of sub-outlets, provided the sub-outlets of an individual outlet dispense the particulate material to the same mid-row in the field.

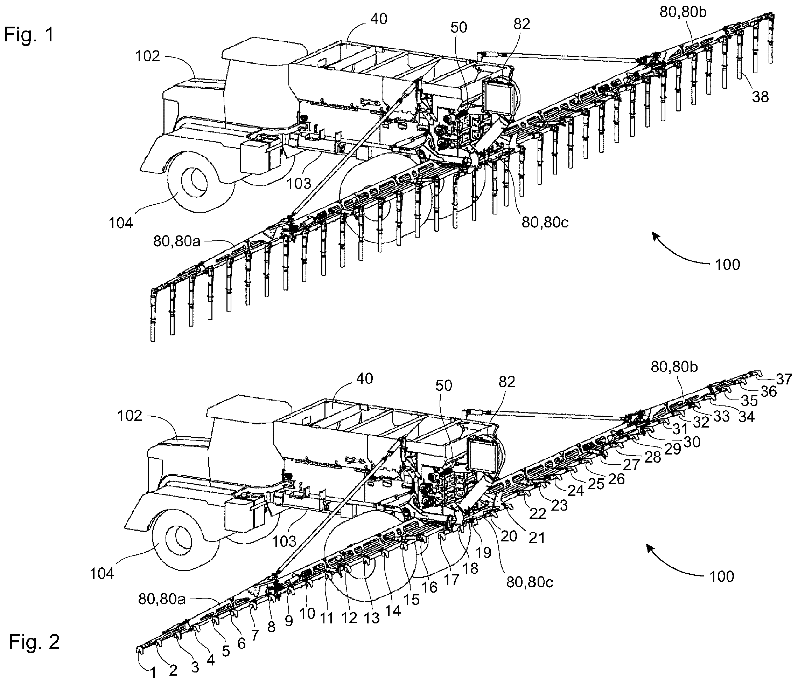

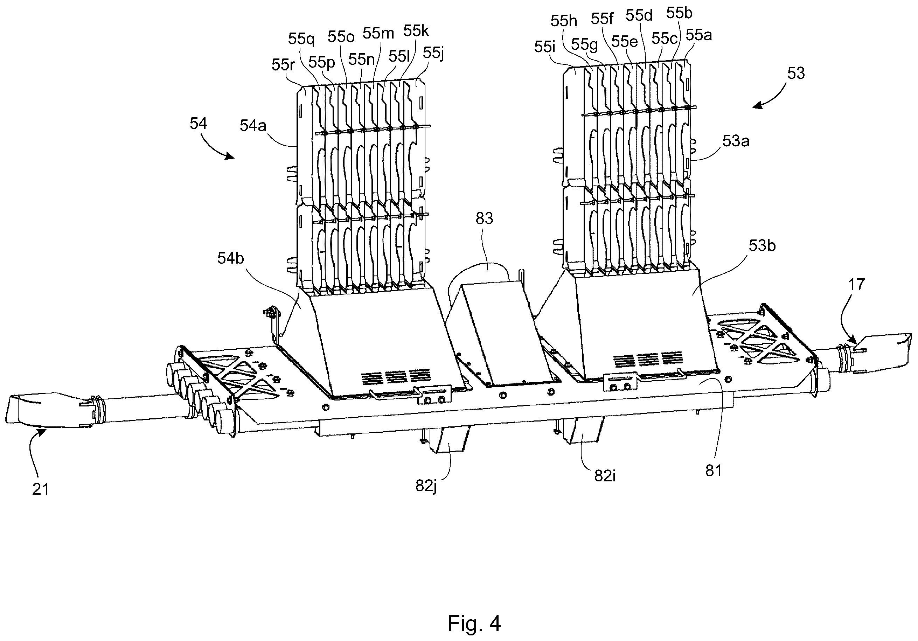

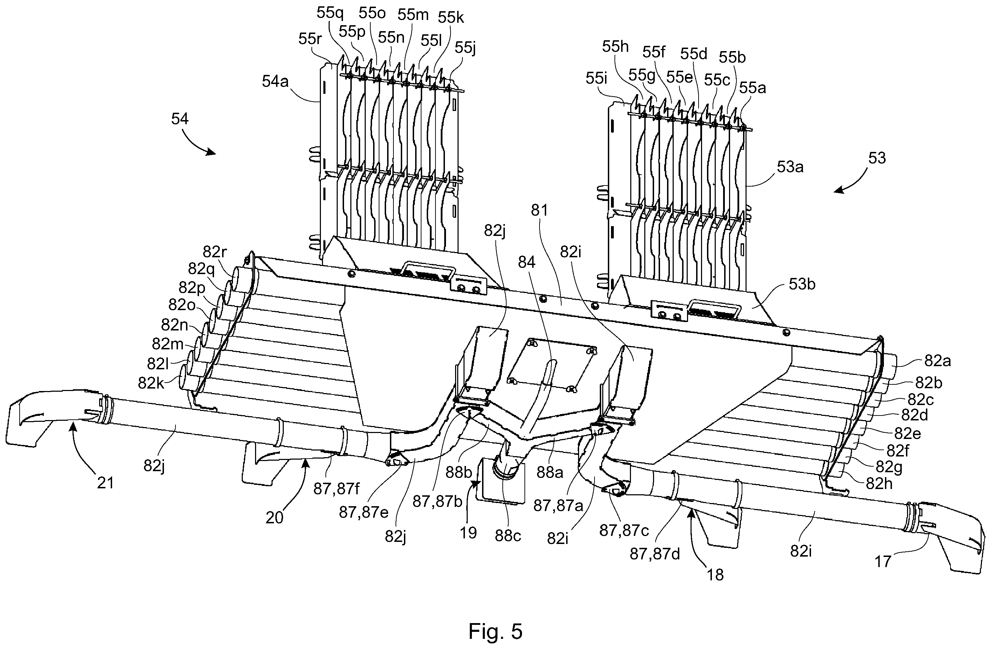

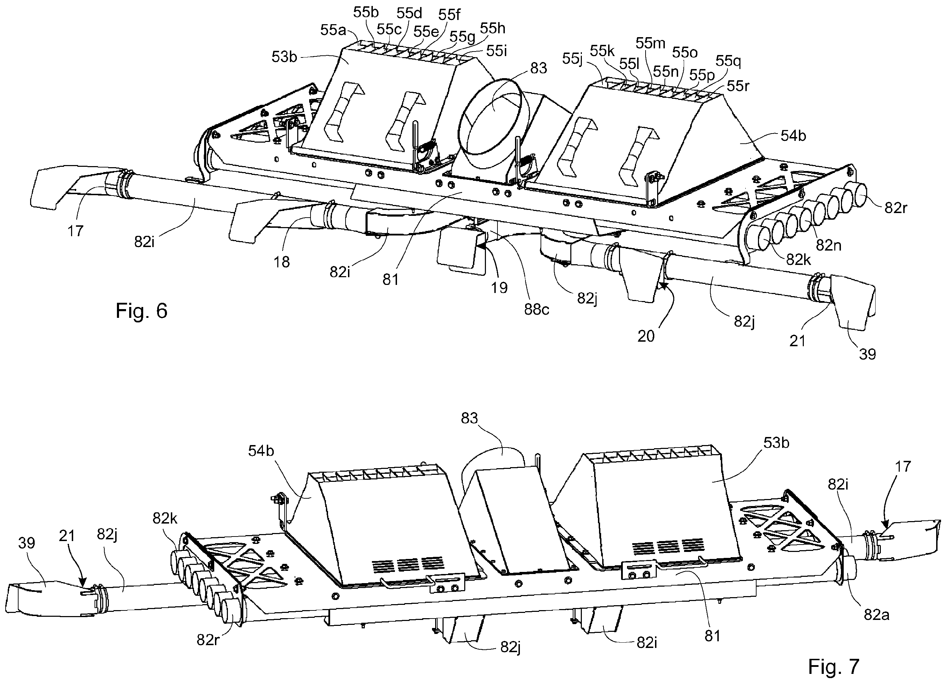

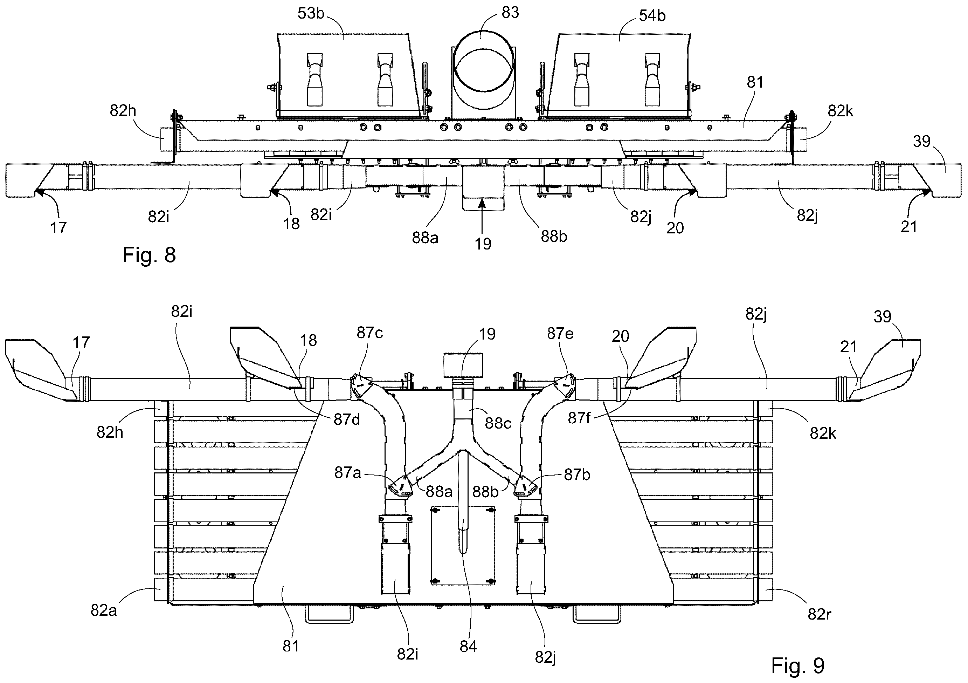

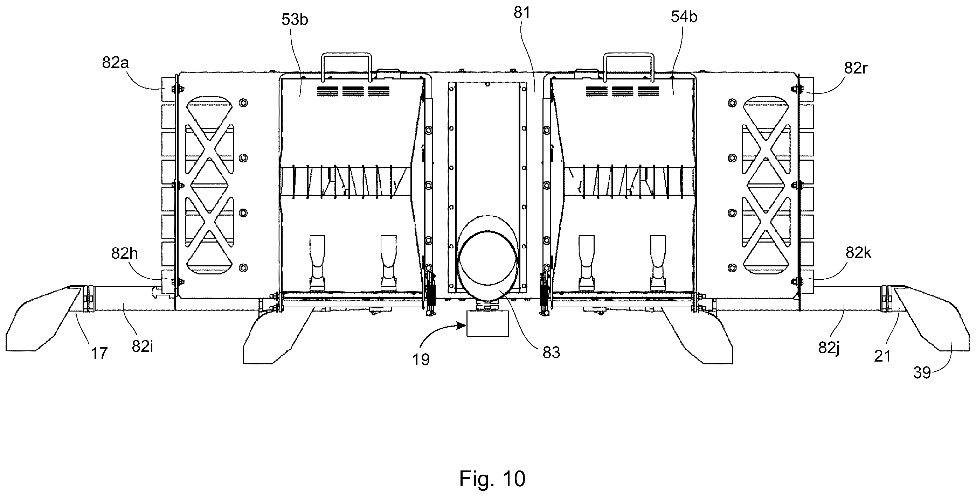

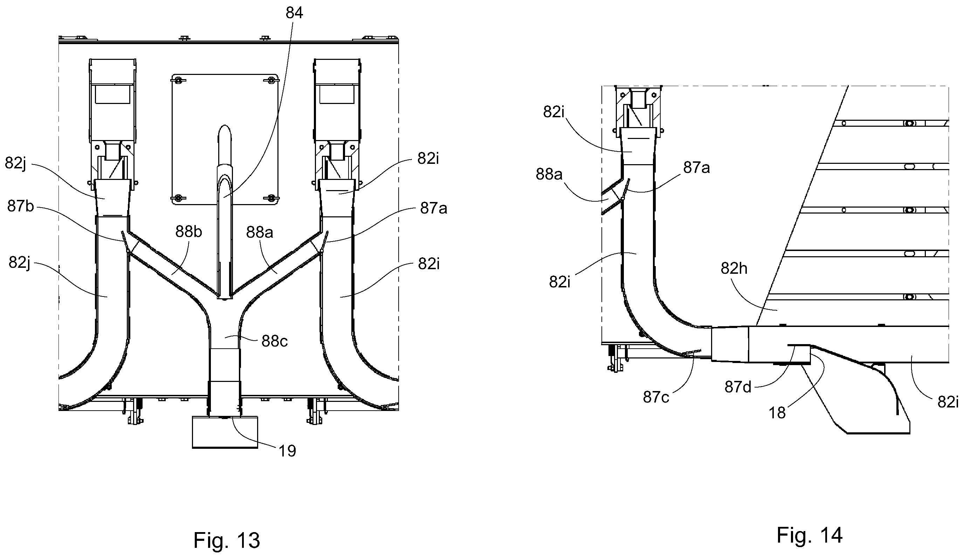

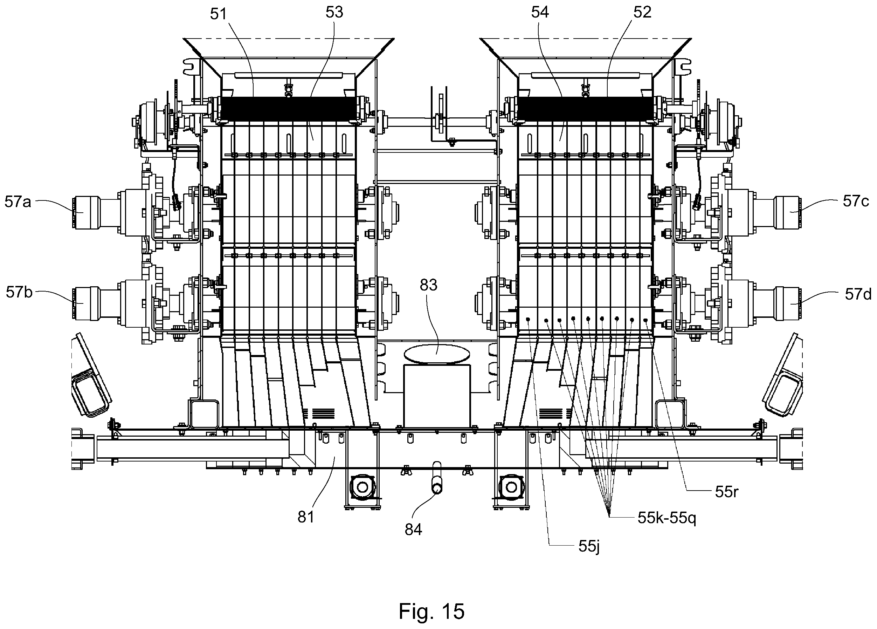

With reference to Fig. 1 to Fig. 17, one embodiment of an air-boom spreader **100** is illustrated. The spreader **100** comprises a prime mover, for example a truck **102,** a hopper **40** supported on a chassis **103** of the truck **102,** a metering device **50** mounted on the bed of the truck **102** at a rear of the truck **102** and an air-boom **80** mounted on the bed of the truck **102** at the rear of the truck **102.** The air-boom **80** has a total span of about 90 feet (about 27.5 meters) and comprises a first boom section **80a,** a second boom section **80b,** and a central boom section **80c,** the first boom section **80a** extendible transversely left from the metering device **50** and the second boom section **80b** extendible transversely right from the metering device **50.** The boom sections **80a, 80b** have proximal and distal ends, whereby the proximal ends are closer to the metering device than the distal ends. In this embodiment, the air-boom **80** is substantially perpendicular to a direction of travel of the truck **102** and substantially parallel to a field during operation of the spreader **100.** The boom sections **80a, 80b** are foldable through a substantially horizontal plane so that the boom sections **80a, 80b** are substantially parallel to the direction of travel of the truck **102** during transportation along a roadway. The truck **102** has wheels **104** (only one labeled) for driving in fields and on roadways.

In the illustrated embodiment, the metering device **50** comprises sluice boxes, which comprise a first sluice box **53** and a second sluice box **54.** The metering device **50** further comprises metering elements. The metering elements comprise a first set of meter rollers **51** and a second set of meter rollers **52** above the sluice boxes **53, 54,** respectively, and four endless belts **56a, 56b, 56c, 56d** behind the sluice boxes **53, 54.** The endless belts **56a, 56b, 56c, 56d** comprise a first upper endless belt **56a,** a first lower endless belt **56b,** a second upper endless belt **56c** and a second lower endless belt **56d.** The first and second sets of meter rollers **51, 52** are situated to deliver particulate material to the sluice boxes **53, 54,** respectively. The first upper and first lower endless belts **56a, 56b** are situated to deliver particulate material to the first sluice box **53.** The second upper and second lower endless belts **56c, 56d** are situated to deliver particulate material to the second sluice box **54.**

The sets of meter rollers **51, 52** and the four endless belts **56a, 56b, 56c, 56d** receive particulate material from the hopper **40,** the endless belts **56a, 56b, 56c, 56d** extending into the hopper **40.** Particulate agricultural material contained in the hopper **40** is supplied to the sets of meter rollers **51, 52** and the endless belts **56a, 56b, 56c, 56d** by gravity. The sets of meter rollers **51, 52** are driven by a common motor, but are independently controllable by dedicated clutches, which engage and disengage their respective sets of meter rollers **51, 52** to turn the sets of meter rollers **51, 52** on and off. The endless belts **56a, 56b, 56c, 56d** are each independently controlled by dedicated motors **57a, 57b, 57c, 57d,** respectively. Therefore, one side or the other of the metering device **50** may be shut off to permit distribution of particulate material to only one side of the spreader **100,** if desired.

On a given side of the metering device **50,** one or more of the metering elements may be used to deliver the particulate material to the sluice boxes. For example, the first and second sluice boxes **53, 54** may receive the particulate material from the first and second sets of meter rollers **51, 52,** respectively, but not from the endless belts **56a, 56b, 56c, 56d.** Any one or more of the set of meter rollers and endless belts on a given side of the metering device may be used to deliver the particulate material to the sluice box on that side. The first sluice box **53** comprises a first upper funnel portion **53a** and a first lower funnel portion **53b.** The second sluice box **54** comprises a second upper funnel portion **54a** and a second lower funnel portion **54b.** Dividing fins in the funnel portions **53a, 53b** of the first sluice box **53** define 9 sluices **55a, 55b, 55c, 55d, 55e, 55f, 55g, 55h, 55i.** Dividing fins in the funnel portions **54a, 54b** of the second sluice box 54 define another 9 sluices **55j, 55k, 551, 55m, 55m, 55o, 55p, 55q, 55r.** The metering device 50 therefore comprises a total of 18 sluices **55a-55r.** The sluices **55i, 55j** are wide, being configured to supply 1.25 times as much particulate material than the sluices **55b-55h** and **55k-55q.** The sluices **55a, 55r** are narrow being configured to supply 0.75 times as much particulate material as the sluices **55b-55h** and **55k-55q.**

The air-boom 80 further comprises an air manifold having a central airbox **81** for supporting various components of the air manifold and for providing air to other parts of the air manifold. The air manifold comprises 18 air lines **82a, 82b, 82c, 82d, 82e, 82f, 82g, 82h, 82i, 82j, 82k, 821, 82m, 82n, 82o, 82p, 82q, 82r** supported on and in fluid communication with the airbox **81.** The air lines **82a-82r** are supplied with particulate material from the 18 sluices **55a-55r,** respectively. Defining 1 unit of particulate material as described above: the sluices **55a** and **55r** supply 1.5 units of the particulate material to the air lines **82a** and **82r,** respectively; the sluices **55i** and **55j** supply 2.5 units of the particulate material to the air lines **82i** and **82j,** respectively; and, the sluices **55b, 55c, 55d, 55e, 55f, 55g, 55h, 55k, 551, 55m, 55m, 55o, 55p, 55q** supply 2 units of the particulate material to the air lines **82b, 82c, 82d, 82e, 82f, 82g, 82h, 82k, 821, 82m, 82n, 82o, 82p, 82q,** respectively.

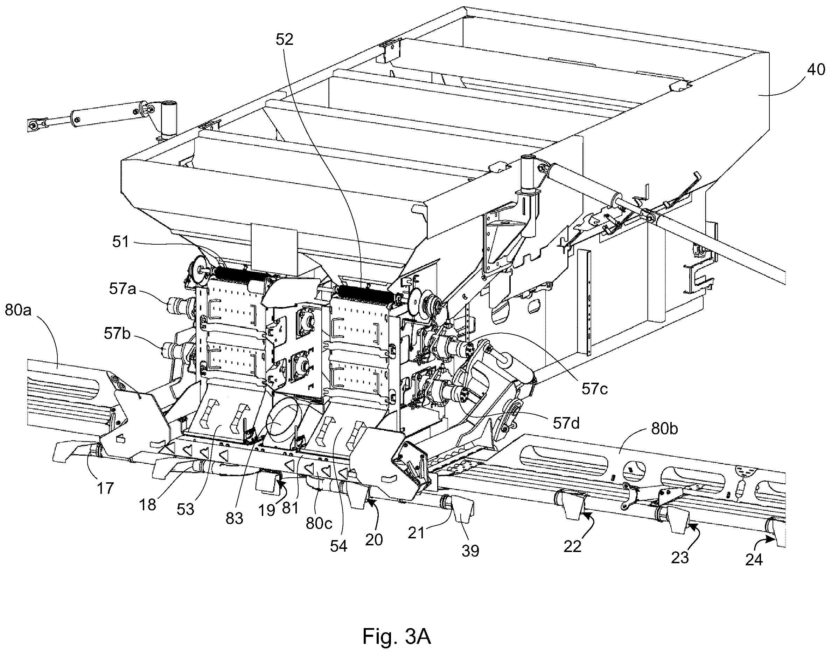

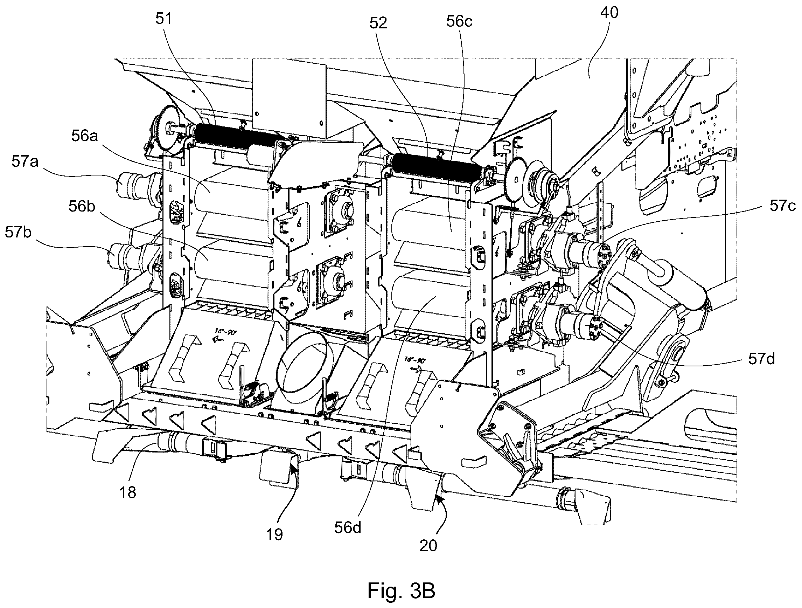

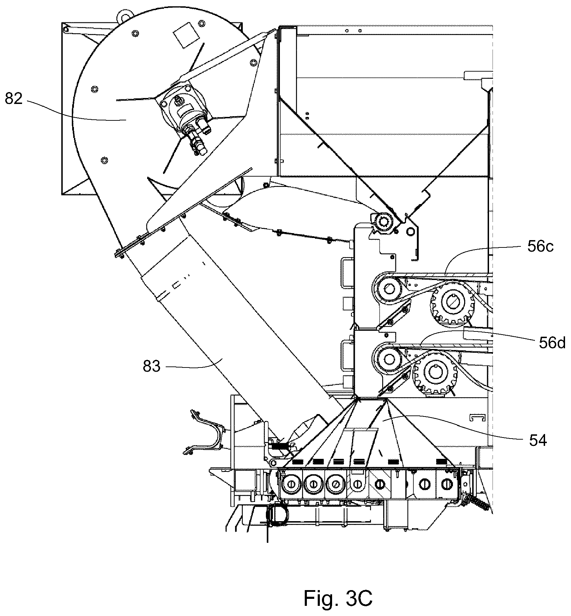

The air lines **82a-82r** of the air-boom **80** are equipped with a total of 37 outlets **1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37.** The outlets **1-37** may be equipped with drop tubes **38** (only one labeled) and/or with deflectors **39** (see Fig. 3A, only one labeled) to help guide the particulate material from the outlets **1-37** to the field below. The 18 air lines **82a-82r** convey the particulate material to the 37 outlets **1-37** in an air stream. The air stream is generated by a blower **82** that blows air through a main duct **83** into the airbox **81** and then into the air lines **82a-82r.The** air manifold further comprises a booster hose **84** in fluid communication with airbox **81** and the outlet **19** to provide extra air flow through the outlet **19** to help prevent plugging of the outlet **19** during operation. The booster hose may be omitted if there is sufficient air flow without the booster hose.

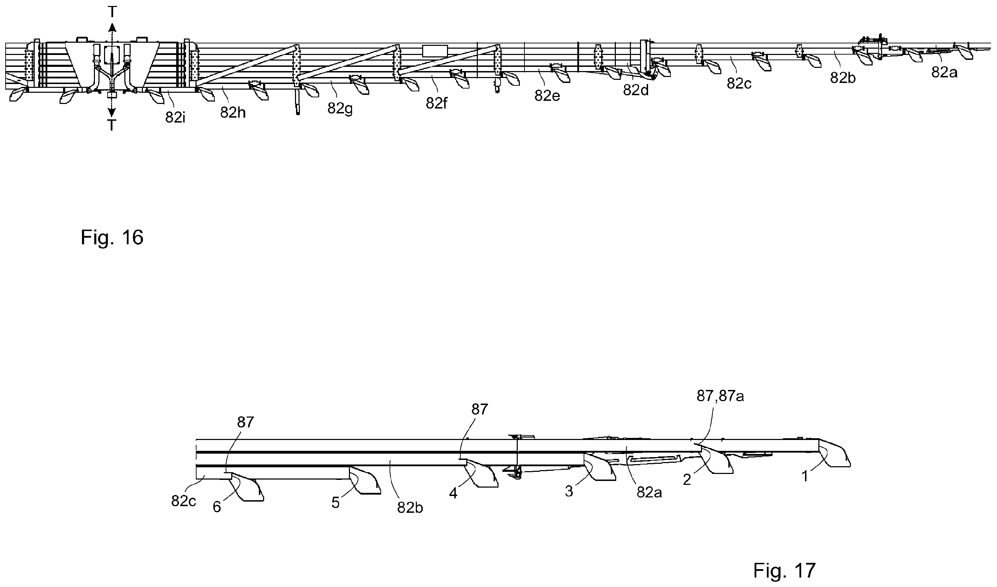

The outlets **1** and **2** are a pair of distal-most outlets on the left side of the spreader **100.** The outlets **36** and **37** are another pair of distal-most outlets on the right side of the spreader **100.** The outlet **19** is a center outlet located over a central travel line **T-T** (see Fig. 16) of the spreader **100.** The outlets **17** and **18** are a pair of interior outlets on the left side of the spreader **100.** The outlets **20** and **21** are another pair of interior outlets on the right side of the spreader **100.** The other outlets **3, 4, 5, 6, 7, 8, 9, 10, 11, 12, 13, 14, 15, 16, 22, 23, 24, 25, 26, 27, 28, 29, 30, 31, 32, 33, 34, 35** are paired, with outlet pairs **3/4, 5/6, 7/8, 9/10, 11/12, 13/14, 15/16** situated between the distal-most pair of outlets **1/2** and the interior pair of outlets **17/18** on the left side of the spreader **100** and outlet pairs **22/23, 24/25, 26/27, 28/29, 30/31, 32/33, 34/35** situated between the other distal-most pair of outlets **36/37** and the other interior pair of outlets **20/21** on the right side of the spreader **100.**

The 16 outlet pairs **1/2, 3/4, 5/6, 7/8, 9/10, 11/12, 13/14, 15/16, 22/23, 24/25, 26/27, 28/29, 30/31, 32/33, 34/35** and **36/37** are provided with particulate material through the air lines **82a, 82b, 82c, 82d, 82e, 82f, 82g, 82h, 82k, 821, 82m, 82n, 82o, 82p, 82q** and **82r,** respectively. The interior pair of outlets **17/18** and the center outlet **19** are provided with particulate material through the air line **82i,** while the other interior pair of outlets **20/21** and the center outlet **19** are provided with particulate material through the air line **82j.**

To ensure that the desired amount of particulate material is dispensed through each of the outlets **1-37,** a plurality of flow dividers **87** are used. Additionally, to ensure that the center outlet **19** is supplied with particulate material from both the air line **82i** and the air line **82j,** the particulate material is diverted from the air lines **82i** and **82j** through branch air lines **88a** and **88b,** respectively.

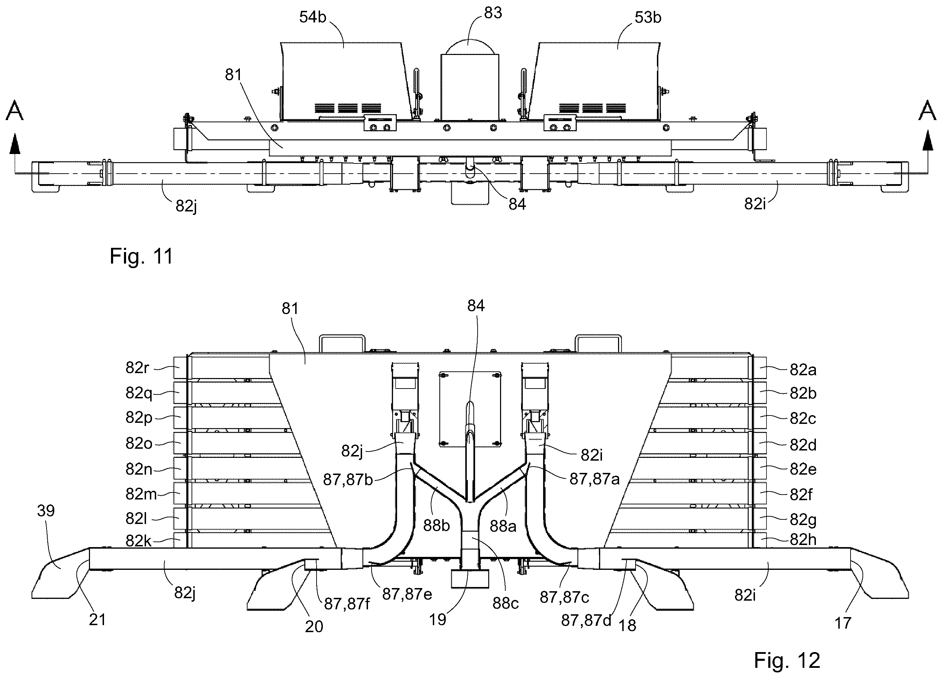

As best seen in Fig. 12, Fig. 13 and Fig. 14, flow divider **87a** in the form of an adjustable deflector located at a junction between the air line **82i** and the branch air line **88a** ensures that one-fifth of the 2.5 units of particulate material delivered from the sluice **55i** to the air line **82i** is diverted into the branch air line **88a** while four-fifths of the 2.5 units continues through the air line **82i.** Flow divider **87b** in the form of an adjustable deflector located at a junction between the air line **82j** and the branch air line 88b ensures that one-fifth of the 2.5 units of particulate material delivered from the sluice **55j** to the air line **82j** is diverted into the branch air line **88b** while four-fifths of the 2.5 units continues through the air line **82j.** The branch air lines **88a** and **88b** join at a Y-junction to form a joined branch air line **88c,** which conveys the particulate material to the center outlet **19.** Joining the branch air lines **88a** and **88b** combines the respective 0.5 unit of particulate material into 1 unit so that 1 unit of the particulate material is dispensed by the center outlet **19.** The booster hose **84** joins to the joined branch air line **88c** at the crook of the 'Y' to provide extra air flow from behind the particulate material flowing from the branch air lines **88a** and **88b** into the joined branch air line **88c.The** 2 units of particulate material flowing through the air line **82i** downstream of the flow divider **87a** is further divided into two 1 unit portions with the aid of flow divider **87c** in the form of an adjustable deflector located at a 90-degree bend in the air line **82i** and flow divider **87d** in the form of an adjustable deflector located at the outlet **18.** In this manner, each of the outlets **17, 18** of the pair of interior outlets **17/18** dispense 1 unit of the particulate material. Likewise, the 2 units of particulate material flowing through the air line **82j** downstream of the flow divider **87b** is further divided into two 1 unit portions with the aid of flow divider **87e** in the form of an adjustable deflector located at a 90-degree bend in the air line **82j** and flow divider **87f** in the form of an adjustable deflector located at the outlet **20.** In this manner, each of the outlets **20, 21** of the pair of interior outlets **20/21** dispense 1 unit of the particulate material.

Each of the 16 air lines **82a, 82b, 82c, 82d, 82e, 82f, 82g, 82h, 82k, 821, 82m, 82n, 82o, 82p, 82q** and **82r** are equipped with one flow divider 87 each in the form of an adjustable deflector located at the respective outlets **2, 4, 6, 8, 10, 12, 14, 16, 22, 24, 26, 28, 30, 32, 34** and **36.** The 2 units of particulate material supplied to each of **82b, 82c, 82d, 82e, 82f, 82g, 82h, 82k, 821, 82m, 82n, 82o, 82p** and **82q** are divided equally into two 1 unit portions so that each of the two outlets on a given air line dispense 1 unit of the particulate material. In outermost-extending air lines **82a** and **82r,** the flow divider **87** (labeled as **87a** in Fig. 17 for the outermost-extending air line **82a)** is adjusted to divide the supplied 1.5 units into one 0.5 unit portion and one 1 unit portion so that the penultimate outlets **2** and **36** of the distal-most pairs of outlets **1/2** and **36/37,** respectively, dispense 1 unit of the particulate material while outermost outlets 1 and 37 of the distal-most pairs of outlets **1/2** and **36/37,** respectively, dispense 0.5 unit of the particulate material. When tramlining through the field, the spreader **100** will dispense 1 unit of the particulate material to all mid-rows because the outermost outlets **1** and **37** will each dispense 0.5 units of the particulate material to the same outermost mid-row but on immediately subsequent passes. One or more of the flow dividers **87** may be adjustable to aid in obtaining proper distribution of the particulate material. Adjustable deflectors may be adjustable by any suitable method, for example by mechanical bending (e.g. as at **87f),** by pivoting and clamping in place (e.g. as at **87b)** or by sliding and clamping in place (as at **87e).**

The arrangement of air lines **82a-82r** in the central airbox **81** offers a significant advantage with respect to air flow through to the outermost outlets **1, 37** and to the central outlet **19.** Air from the central airbox **81** to the center outlet **19** is not required to go through a 180° degree turn and then a 90° turn before reaching the outlet **19.** Therefore, less energy is dissipated and less air is required to properly distribute the particulate material to the center outlet **19.** This leaves more air to distribute the particulate material to the interior pairs of outlets **17/18** and **20/21.** Plugging is avoided or reduced sufficiently and proper particulate material distribution rate is maintained at the center outlet **19** and the interior pairs of outlets **17/18** and **20/21.** Further, the longest airlines, **82a** and **82r,** are straight having no bends to dissipate energy from the air stream, thereby providing sufficient air flow to convey the particulate material the required longer distance at the proper distribution rate.

Furthermore, use of steel tube for the airlines **82a-82r,** especially the longest airlines, **82a** and **82r,** is more efficient. As the total boom span of the spreader increases beyond 60 feet (about 18.5 meters), it becomes more undesirable to use a single steel tube to convey the particulate material to a single outlet. The extra weight of one tube per line would be difficult to manage in wider boom weldments. Supporting this extra weight would create a very heavy structure that may be either too heavy thereby reducing carrying capacity, or the boom itself may self-destruct having too much weight out too far from the hopper. By having each airline convey particulate material to two or more outlets, the amount of steel tube required is lessened, thereby reducing weight and cost of the spreader. Furthermore, having each airline convey particulate material to two or more outlets, it becomes more feasible to increase the diameter of the venturis and the airlines in the air manifold, which permits increasing flow rate of the particulate material in each airline, for example to about 120 lb/min/line (54.4 kg/min/line), thereby successfully distributing the particulate material at a higher rate at the same or lower vehicle speed, e.g.1200 Ib/acre (0.135 kg/m²) at 10 mph (16.1 km/h), further out from the vehicle.

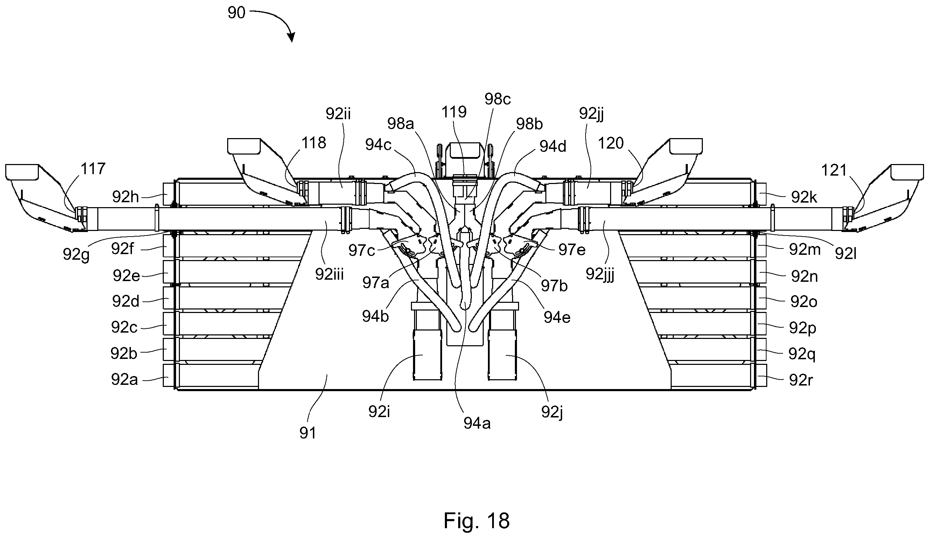

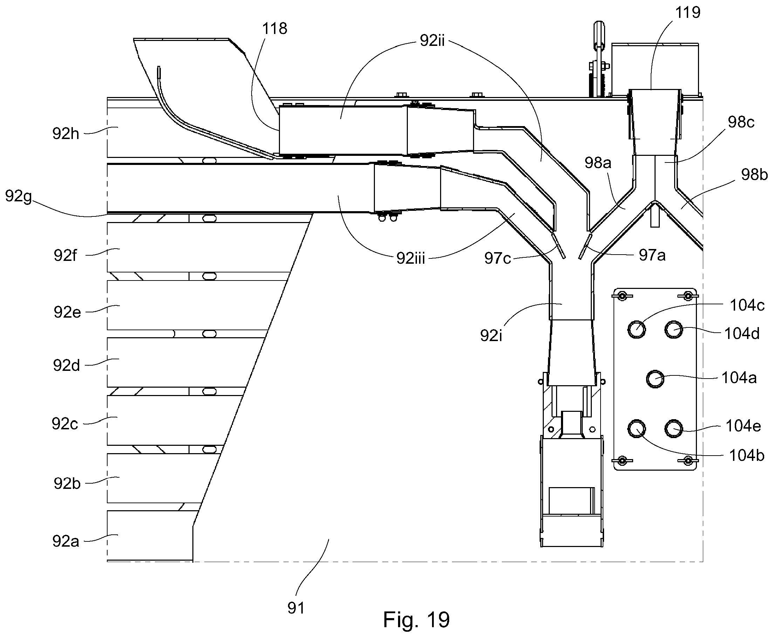

As seen in Fig. 18 and Fig. 19, in an alternate embodiment, an air-boom **90** of a spreader of the present invention comprises structures similar to the air-boom **80** described above including an alternate embodiment of an air manifold comprising a central airbox **91,** for supporting various components of the air manifold and for providing air to other parts of the air manifold. The air manifold comprises 20 air lines **92a, 92b, 92c, 92d, 92e, 92f, 92g, 92h, 92ii, 92iii, 92jj, 92jjj, 92k, 921, 92m, 92n, 92o, 92p, 92q, 92r** supported on and in fluid communication with the airbox **91.** The air lines **92ii** and **92iii** are situated underneath the air lines **92h** and **92g,** respectively, while likewise the air lines **92jj** and **92jjj** are situated underneath the air lines **92k** and **921,** respectively, during operation of the air-boom **90.** Thus, most of the air lines are situated and extend transversely in the same horizontal plane, while the air lines **92ii, 92iii, 92jj** and **92jjj** are situated and extend transversely in a horizontal plane underneath the other air lines during operation of the air-boom **90.**

All twenty of the air lines **92a-92r** are supplied with particulate material from 18 sluices. To this end, the air lines **92ii** and **92iii** are split from a single feed air line **92i,** the feed air line **92i** receiving particulate material from one of the sluices. Likewise, the air lines **92jj** and **92jjj** are split from a single feed air line **92j,** the feed air line **92j** receiving particulate material from one of the sluices. As described above, the air lines **92a** and **92r** each receive 1.5 units of particulate material, the air lines **92b, 92c, 92d, 92e, 92f, 92g, 92h, 92k, 921, 92m, 92n, 92o, 92p, 92q** each receive 2 units of the particulate material, and the air lines **92i** and **92j** each receive 2.5 units of the particulate material. Operation of the air-boom **90** is the same as air-boom **80** except for the following.

Outlets **117** and **118** are a pair of interior outlets on the left side, but instead of being on the same transversely extending interior air line, the outlets **117** and **118** are on different interior air lines **92iii** and **92ii,** respectively. Likewise, outlets **120** and **121** are a pair of interior outlets on the right side, but instead of being on the same transversely extending interior air line, the outlets **120** and **121** are on different interior air lines **92jj** and **92jjj,** respectively.

Further, in order for the interior outlets **117, 118, 120** and **121** as well as a central outlet **119** to each receive 1 unit of the particulate material, a somewhat different flow dividing arrangement is utilized. With particular reference to Fig. 19, the single feed air line **92i** receives 2.5 units of the particulate material. The single feed air line **92i** splits into the air lines **92ii** and **92iii** before the air lines **92ii** and **92iii** bend to extend transversely. The splitting of the single feed air line **92i** into the air lines **92ii** and **92iii** is proximate or at the same location in the single feed air line **92i** as a junction with a branch air line **98a** that carries the particulate material to the central outlet **119.** The single feed air line **92i** is equipped with two flow dividers **97a** and **97c** in the form of adjustable deflectors. The flow divider **97a** is located at the junction between the single feed air line **92i** and the branch air line **98a** to ensure that one-fifth of the 2.5 units of particulate material is diverted into the branch air line **98a.** The flow divider **97c** is located at the junction between the single feed air line **92i** and the air lines **92ii** and **92iii** to ensure that two-fifths of the 2.5 units of particulate material is diverted into the air line **92ii** and that two-fifths of the 2.5 units of particulate material is diverted into the air line **92iii.** Thus, the flow divider **97c** is located before the bends in the air lines **92ii** and **92iii.** Essentially the same arrangement is provided on the right side of the air-boom **90,** utilizing flow divider **97b** to divert one-fifth of the 2.5 units of the particulate material from the single feed air line **92j** into a branch air line **98b,** and to divert two-fifths of the particulate material from the single feed air line **92j** into each of the air lines **92jj** and **92jjj.** The two branch air lines **98a** and **98b** join at a Y-junction to form a joined branch air line **98c,** which conveys the particulate material to the center outlet **119.** In this manner, each of the outlets **117, 118, 119, 120** and **121** receives 1 unit of the particulate material.

Like in the air-boom **80** described above, the air manifold of the air-boom **90** further comprises a booster hose **94a** in fluid communication with airbox **91** and the center outlet **119** through the joined branch air line **98c** to provide extra air flow through the center outlet **119** to help prevent plugging of the center outlet **119** during operation. In the air-boom **90,** four additional booster hoses **94b, 94c, 94d** and **94e** in fluid communication with airbox **91** and the interior outlets **117, 118, 120** and **121,** respectively, through the air lines **92iii, 92ii, 92jj** and **92jjj,** respectively, are provided to provide extra air flow through the outlets **117, 118, 120** and **121.** Fig. 19 illustrates ports **104a, 104b, 104c, 104d** and **104e** in the airbox **91** to which the booster hoses **94a, 94b, 94c, 94d** and **94e,** respectively, are connected.

The arrangement illustrated in Fig. 18 and Fig. 19 provides for even better control over the uniformity of distribution of the particulate material at the outlets, and provides better uniformity of distribution for a larger variety of particle types (e.g. particle density) and air flow rates.

The novel features will become apparent to those of skill in the art upon examination of the description. It should be understood, however, that the scope of the claims should not be limited by the embodiments, but should be given the broadest interpretation consistent with the wording of the claims defining the invention.

## Claims

1. An air-boom spreader (100) for spreading particulate material to mid-rows between crop rows on a field, the spreader comprising:
a hopper (40) for containing the particulate material;
a metering device (50) configured to receive the particulate material from the hopper;
a plurality of outlets transversely spaced-apart on a boom in a direction substantially non-parallel to a direction of travel of the spreader (100) and configured to receive the particulate material from the metering device (50) and to dispense the particulate material to the mid-rows, the plurality of outlets (1-37) comprising a pair of distal-most outlets (1/2, 36/37) in relation to the metering device, the pair of distal-most outlets (1/2, 36/37) comprising an outermost outlet (1,37) and a penultimate outlet (2, 36), an innermost outlet (19) in relation to the metering device, and a pair of interior outlets (17/18, 20/21) situated on the boom between the pair of distal-most outlets (1/2, 36/37) and the innermost outlet (19); and,
a plurality of air lines (82a-82r) connecting the metering device (50) to the plurality of outlets (1-37) for conveying the particulate material in an air stream to the plurality of outlets,
**characterised by**
the plurality of air lines comprising a first air line (82a, 82r) connecting the metering device to the pair of distal-most outlets (1/2, 36/37), the metering device supplying 1.5 units of the particulate material to the first air line, the first air line configured to convey one-third of the 1.5 units of the particulate material to the outermost outlet (1,37) and two-thirds of the 1.5 units of the particulate material to the penultimate outlet (2,36), a second air line (82i, 82j) connecting the metering device (50) to the innermost outlet (19) and the pair of interior outlets (17/18, 20/21), the metering device (50) supplying 2.5 units of the particulate material to the second air line, the second air line configured to convey one-fifth of the 2.5 units of the particulate material to the innermost outlet (19) and two-fifths of the 2.5 units of the particulate material to each outlet of the pair of interior outlets (17/18, 20/21).

2. The spreader (100) of claim 1, wherein the innermost outlet (19) is over a central travel line (T-T) of the spreader.

3. The spreader (100) of claim 1 or claim 2, wherein the plurality of outlets (1-37) further comprises at least one pair of other outlets (3/4, 5/6, 7/8, 9/10, 11/12, 13/14, 15/16, 22/23, 24/25, 26/27, 28/29, 30/31, 32/33, 34/35) situated on the boom (80) between the pair of distal-most outlets (1/2, 36/37) and the pair of interior outlets (17/18, 20/21), and the at least one pair of other outlets are supplied with the particulate material through at least one other air line (82b-82h, 82k-82q).

4. The spreader (100) of any one of claims 1 to 3, wherein the air-boom (80) further comprises a blower (82) in fluid communication with the plurality of air lines (82a-82r) for providing the air stream in the plurality of air lines (82a-82r).

5. The spreader (100) of any one of claims 1 to 4, wherein the metering device (50) comprises one or more metering elements, and the one or more metering elements comprises an endless belt (56a-56d) or a set of meter rollers (51,52).

6. The spreader (100) of any one of claims 1 to 5, wherein:
the first air line (82a, 82r) comprises a first flow divider (87a) to divide the 1.5 units of the particulate material between the outermost outlet (1, 37) and the penultimate outlet (2, 36); and,
the second air line (82i, 82j) comprises a second flow divider (87a, 87b) to divide the 2.5 units of the particulate material between the innermost outlet (19) and the pair of interior outlets (17/18, 20/21) and comprises a third flow dividen (87c/d, 87 e/f) to provide each of the outlets of the pair of interior outlets with the respective two-fifths of the 2.5 units.

7. The spreader (100) of claim 6, wherein:
the pair of interior outlets (117/118, 120/121) comprises a first interior outlet (118, 120) and a second interior outlet (117, 121);
the first interior outlet (118, 120) is situated on a first interior air line (92ii, 92jj), the first interior air line having a first bend so that the first interior air line extends transversely, the first interior outlet (118, 120) situated after the first bend;
the second interior outlet (117, 121) is situated on a second interior air line (92iii, 92jjj), separate from the first interior air line, the second interior air line having a second bend so that the second interior air line extends transversely, the second interior outlet (117, 121) situated after the second bend; and,
the third flow divider (97c, 97e) divides the particulate material between the first and second interior air lines (92ii, 92iii, 92jj, 92jjj), the third flow divider (97c, 97e) situated before the first and second bends.

8. The air-boom spreader (100) of claim 1, wherein:
the metering device (50) partitions the particulate material and the metering device comprises
first and second metering elements, each metering element receiving the particulate material from the hopper (40), and
first and second sluice boxes, (53, 54) the first sluice box (53) having a first plurality of sluices (55a, 55b, 55c, 55d, 55e, 55f, 55g, 55h, 55i) therein that receive the particulate material from the first metering element, the second sluice box (54) having a second plurality of sluices (55j, 55k, 55l, 55m, 55m, 55o, 55p, 55q, 55r ) therein that receive the particulate material from the second metering element;
the boom (80) is transversely extendible in opposite transverse directions distally from the metering device (50) substantially non-parallel to the direction of travel of the spreader (100) and substantially non-perpendicular to the field;
the plurality of outlets (1-37) comprises
the first pair of distal-most outlets (1/2) situated on a first side of the spreader, the first pair of distal-most outlets comprising the first outermost outlet (1) and the first penultimate outlet (2),
a second pair of distal-most outlets (36/37) situated on a second side of the spreader, the second pair of distal-most outlets comprising a second outermost outlet (37) and a second penultimate outlet (36), the innermost outlet being a center outlet (19) situated over a central travel line (T-T) of the spreader (100), the first pair of interior outlets (17/18) situated between the first pair of distal-most outlets (1/2) and the center outlet (19), a second pair of interior outlets (20/21) situated between the second pair of distal-most outlets (36/37) and the center outlet (19); and
the plurality of air lines (82a-82r) connects the first and second plurality of sluices (55a-55r) to the plurality of outlets (1-37) for conveying the particulate material in the air stream to the plurality of outlets, the first air line (82a, 82r) comprising a first outermost-extending air line (82a) connecting a first outermost-supplying sluice (55a) situated among the first plurality of sluices to the first pair of distal-most outlets (1/2), the first outermost-supplying sluice (55a) supplying a first 1.5 units of the particulate material to the first outermost-extending air line (82a), the first outermost-extending air line configured to convey one-third of the first 1.5 units of the particulate material to the first outermost outlet (1) and two-thirds of the first 1.5 units of the particulate material to the first penultimate outlet (2), a second outermost-extending air line (82r) connecting a second outermost-supplying sluice situated (55r) among the second plurality of sluices to the second pair of distal-most outlets (36/37), the second outermost-supplying sluice supplying a second 1.5 units of the particulate material to the second outermost-extending air line, the second outermost-extending air line configured to convey one-third of the second 1.5 units of the particulate material to the second outermost outlet (37) and two-thirds of the second 1.5 units of the particulate material to the second penultimate outlet (36), the second air line (82i, 82j) comprising
a first centrally-extending air line (82i) connecting a first centrally-supplying sluice (55i) situated among the first plurality of sluices to the center outlet (19) and the first pair of interior outlets (17/18), the first centrally-supplying sluice supplying a first 2.5 units of the particulate material to the first centrally-extending air line (82i), the first centrally-extending air line configured to convey one-fifth of the first 2.5 units of the particulate material to the center outlet (19) and two-fifths of the first 2.5 units of the particulate material to each outlet of the first pair of interior outlets (17/18), and a second centrally-extending air line (82j) connecting a second centrally-supplying sluice situated among the second plurality of sluices (55j) to the center outlet and the second pair of interior outlets (20/21), the second centrally-supplying sluice supplying a second 2.5 units of the particulate material to the second centrally-extending air line, the second centrally-extending air line configured to convey one-fifth of the second 2.5 units of the particulate material to the center outlet (19) and two-fifths of the second 2.5 units of the particulate material to each outlet of the second pair of interior outlets (20/21).

9. The spreader (100) of claim 8, wherein the boom (80) has a span of greater than about 18,5 meters (60 feet).

10. The spreader (100) of claim 8, wherein the boom (80) has a span between about 24,5 meters and 30,5 meters (80 feet and 100 feet).

11. The spreader (100) of any one of claims 8 to 10, wherein the air-boom (80) further comprises a blower (82) in fluid communication with the plurality of air lines (82a-82r) for providing the air stream in the plurality of air lines.

12. The spreader (100) of any one of claims 8 to 11, wherein the plurality of outlets (1-37) further comprises at least one first pair of other outlets (3/4, 5/6, 7/8, 9/10, 11/12, 13/14, 15/16) situated on the first side of the spreader and at least one second pair of other outlets (22/23, 24/25, 26/27, 28/29, 30/31, 32/33, 34/35) situated on the second side of the spreader.

13. The spreader (100) of claim 12, wherein the first pair of interior outlets (17/18) is situated between the at least one first pair of other outlets (3/4, 5/6, 7/8, 9/10, 11/12, 13/14, 15/16) and the center outlet (19) and the second pair of interior outlets (20/21) is situated between the at least one second pair of other outlets (22/23, 24/25, 26/27, 28/29, 30/31, 32/33, 34/35) and the center outlet (19).

14. The spreader (100) of any one of claims 8 to 13, wherein the first and second plurality of sluices (55a-55r) together comprise a total of at least 16 sluices and the plurality of outlets (1-37) comprises a total of at least 33 outlets.

15. The spreader (100) of any one of claims 8 to 13, wherein the first and second plurality of sluices (55a-55r) together comprise a total of 18 sluices and the plurality of outlets comprises a total of 37 outlets.

16. The spreader (100) according to any one of claims 8 to 15, wherein the first and second metering elements are independently controllable.

17. The spreader (100) according to any one of claims 8 to 16, wherein the metering elements comprise endless belts (56a-56d) or sets of meter rollers (51,52) or a combination of at least one endless belt and at least one set of meter rollers.

18. The spreader (100) according to any one of claims 8 to 17, wherein each sluice (55a-55r) supplies the particulate material to at least two of the plurality of outlets (1-37).

19. The spreader (100) according to any one of claims 8 to 18, wherein:
the first outermost-extending air line (82a) comprises the first flow divider (87a) to divide the first 1.5 units of the particulate material between the first outermost outlet and the first penultimate outlet;
the second outermost-extending air line (82r) comprises the first flow divider to divide the second 1.5 units of the particulate material between the second outermost outlet and the second penultimate outlet;
the first centrally-extending air line (82i) comprises the second flow divider (87a) to divide the first 2.5 units of the particulate material between the center outlet (19) and the first pair of interior outlets (17/18) and comprises the third flow divider (87c,d) to provide each of the outlets of the first pair of interior outlets (17/18) with the respective two-fifths of the first 2.5 units,
the second centrally-extending air line (82j) comprises the second flow divider (87b) to divide the second 2.5 units of the particulate material between the center outlet (19) and the second pair of interior outlets (20/21) and comprises the third dividen (87e,f) to provide each of the outlets of the second pair of interior outlets (20/21) with the respective two-fifths of the second 2.5 units.

20. The spreader (100) according to claim 19, wherein:
the first centrally-extending air line (92i) splits into: a first branch air line (98a) in fluid communication with the center outlet (119); a first interior air line (92ii) in fluid communication with one (118) of the outlets of the first pair of interior outlets; and, a second interior air line (92iii) in fluid communication with the other (117) of the outlets of the first pair of interior outlets, wherein:
the second flow divider (97a) diverts one-fifth of the particulate material from the first centrally-extending air line (92i) into the first branch air line (98a); and,
the third flow divider (97c) diverts two-fifths of the particulate material from the first centrally-extending air line (92i) into each of the first and second interior air lines (92ii, 92iii), whereby the first interior air line and the second interior air line both have bends so that the first and second interior air lines extend transversely,
and the third flow divider is situated before the bends in the first and second interior air lines; and,
the second centrally-extending air line (92j) splits into: a second branch air line (98b) in fluid communication with the center outlet (19); a first interior air line (92jj) in fluid communication with one (120) of the outlets of the second pair of interior outlets; and, a second interior air line (92jjj) in fluid communication with the other (121) of the outlets of the second pair of interior outlets, wherein:
the second flow divider (97b) diverts one-fifth of the particulate material from the second centrally-extending air line (92j) into the second branch air line (98b); and,
the third flow divider (97e) diverts two-fifths of the particulate material from the second centrally-extending air line (92j) into each of the first and second interior air lines (92jj, 92jjj), whereby the first interior air line and the second interior air line both have bends so that the first and second interior air lines extend transversely,
and the third flow divider (97e) is situated before the bends in the first and second interior air lines.

## Patentansprüche

1. Pneumatischer Gestängestreuer (100) zum Streuen von teilchenförmigem Material in Mittelreihen zwischen Pflanzenreihen auf einem Feld, wobei der Streuer umfasst:
einen Trichter (40) zum Enthalten von teilchenförmigem Material;
eine Dosiervorrichtung (50), die konfiguriert ist, um das teilchenförmige Material aus dem Trichter aufzunehmen;
eine Vielzahl von Auslässen, die in Querrichtung an einem Ausleger in einer zu einer Fahrtrichtung des Streuers (100) im Wesentlichen nicht parallelen Richtung voneinander beabstandet sind und konfiguriert sind, um das teilchenförmige Material von der Dosiervorrichtung (50) aufzunehmen und das teilchenförmige Material an die Mittelreihen abzugeben, wobei die Vielzahl von Auslässen (1-37) umfasst
ein Paar in Bezug auf die Dosiervorrichtung distalster Auslässe (1/2, 36/37), wobei das Paar distalster Auslässe (1/2, 36/37) einen äußersten Auslass (1,37) und einen vorletzten Auslass (2, 36) umfasst,
einen in Bezug auf die Dosiervorrichtung innersten Auslass (19), und
ein Paar innerer Auslässe (17/18, 20/21), das an dem Ausleger zwischen dem Paar distalster Auslässe (1/2, 36/37) und dem innersten Auslass (19) angeordnet ist; und,
eine Vielzahl von Luftleitungen (82a-82r), die die Dosiervorrichtung (50) mit der Vielzahl von Auslässen (1-37) verbinden, um das teilchenförmige Material in einem Luftstrom zu der Vielzahl von Auslässen zu befördern,
**gekennzeichnet durch**
die Vielzahl von Luftleitungen, umfassend
eine erste Luftleitung (82a, 82r), die die Dosiervorrichtung mit dem Paar distalster Auslässe (1/2, 36/37) verbindet, wobei die Dosiervorrichtung der ersten Luftleitung 1,5 Einheiten des teilchenförmigen Materials zuführt, wobei die erste Luftleitung konfiguriert ist, um ein Drittel der 1,5 Einheiten des teilchenförmigen Materials zu dem äußersten Auslass (1,37) und zwei Drittel der 1,5 Einheiten des teilchenförmigen Materials zu dem vorletzten Auslass (2,36) zu befördern,
eine zweite Luftleitung (82i, 82j), die die Dosiervorrichtung (50) mit dem innersten Auslass (19) und dem Paar innerer Auslässe (17/18, 20/21) verbindet, wobei die Dosiervorrichtung (50) der zweiten Luftleitung 2,5 Einheiten des teilchenförmigen Materials zuführt, wobei die zweite Luftleitung konfiguriert ist, um ein Fünftel der 2,5 Einheiten des teilchenförmigen Materials zu dem innersten Auslass (19) und zwei Fünftel der 2,5 Einheiten des teilchenförmigen Materials zu jedem Auslass des Paars innerer Auslässe (17/18, 20/21) zu befördern.

2. Streuer (100) nach Anspruch 1, wobei der innerste Auslass (19) über einer zentralen Fahrlinie (T-T) des Streuers liegt.

3. Streuer (100) nach Anspruch 1 oder 2, wobei die Vielzahl von Auslässen (1-37) ferner mindestens ein Paar anderer Auslässe (3/4, 5/6, 7/8, 9/10, 11/12, 13/14, 15/16, 22/23, 24/25, 26/27, 28/29, 30/31, 32/33, 34/35) umfasst, die an dem Ausleger (80) zwischen dem Paar distalster Auslässe (1/2, 36/37) und dem Paar innerer Auslässe (17/18, 20/21) angeordnet sind, und dem mindestens einen Paar anderer Auslässe durch mindestens eine andere Luftleitung (82b-82h, 82k-82q) das teilchenförmige Material zugeführt wird.

4. Streuer (100) nach einem der Ansprüche 1 bis 3, wobei das pneumatische Gestänge (80) ferner ein Gebläse (82) in Fluidverbindung mit der Vielzahl von Luftleitungen (82a-82r) zum Bereitstellen des Luftstroms in der Vielzahl von Luftleitungen (82a-82r) umfasst.

5. Streuer (100) nach einem der Ansprüche 1 bis 4, wobei die Dosiervorrichtung (50) ein oder mehrere Dosierelemente umfasst, und das eine oder die mehreren Dosierelemente ein Endlosband (56a-56d) oder einen Satz von Dosierwalzen (51, 52) umfasst.

6. Streuer (100) nach einem der Ansprüche 1 bis 5, wobei:
die erste Luftleitung (82a, 82r) einen ersten Strömungsteiler (87a) umfasst, um die 1,5 Einheiten des teilchenförmigen Materials zwischen dem äußersten Auslass (1, 37) und dem vorletzten Auslass (2, 36) aufzuteilen;
und,
die zweite Luftleitung (82i, 82j) einen zweiten Strömungsteiler (87a, 87b) umfasst, um die 2,5 Einheiten des teilchenförmigen Materials zwischen dem innersten Auslass (19) und dem Paar innerer Auslässe (17/18, 20/21) aufzuteilen, und einen dritten Strömungsteiler (87c/d, 87 e/f) umfasst, um jedem der Auslässe des Paars innerer Auslässe die jeweiligen zwei Fünftel der 2,5 Einheiten bereitzustellen.

7. Streuer (100) nach Anspruch 6, wobei:
das Paar innerer Auslässe (117/118, 120/121) einen ersten inneren Auslass (118, 120) und einen zweiten inneren Auslass (117, 121) umfasst;
der erste innere Auslass (118, 120) an einer ersten inneren Luftleitung (92ii, 92jj) angeordnet ist, wobei die erste innere Luftleitung eine erste Biegung aufweist, sodass sich die erste innere Luftleitung quer erstreckt, wobei der erste innere Auslass (118, 120) hinter der ersten Biegung angeordnet ist;
der zweite innere Auslass (117, 121) an einer zweiten inneren Luftleitung (92iii, 92jjj) angeordnet ist, getrennt von der ersten inneren Luftleitung, wobei die zweite innere Luftleitung eine zweite Biegung aufweist, sodass sich die zweite innere Luftleitung quer erstreckt, wobei der zweite innere Auslass (117, 121) hinter der zweiten Biegung angeordnet ist; und,
der dritte Strömungsteiler (97c, 97e) das teilchenförmige Material zwischen der ersten und der zweiten inneren Luftleitung (92ii, 92iii, 92jj, 92jjj) aufteilt, wobei der dritte Strömungsteiler (97c, 97e) vor der ersten und der zweiten Biegung angeordnet ist.

8. Pneumatischer Gestängestreuer (100) nach Anspruch 1, wobei:
die Dosiervorrichtung (50) das teilchenförmige Material unterteilt und die Dosiervorrichtung umfasst
erste und zweite Dosierelemente, wobei jedes Dosierelement das teilchenförmige Material aus dem Trichter (40) aufnimmt, und
erste und zweite Schleusenkästen, (53, 54) wobei der erste Schleusenkasten (53) eine erste Vielzahl von Schleusen (55a, 55b, 55c, 55d, 55e, 55f, 55g, 55h, 55i) darin aufweist, die das teilchenförmige Material von dem ersten Dosierelement aufnehmen, wobei der zweite Schleusenkasten (54) eine zweite Vielzahl von Schleusen (55j, 55k, 55I, 55m, 55m, 55o, 55p, 55q, 55r) darin aufweist, die das teilchenförmige Material von dem zweiten Dosierelement aufnehmen;
der Ausleger (80) quer in entgegengesetzte Querrichtungen distal von der Dosiervorrichtung (50) im Wesentlichen nicht parallel zur Fahrtrichtung des Streuers (100) und im Wesentlichen nicht senkrecht zum Feld ausfahrbar ist;
die Vielzahl von Auslässen (1-37) umfasst
das erste Paar distalster Auslässe (1/2), das auf einer ersten Seite des Streuers angeordnet ist, wobei das erste Paar distalster Auslässe den ersten äußersten Auslass (1) und den ersten vorletzten Auslass (2) umfasst,
ein zweites Paar distalster Auslässe (36/37), das an einer zweiten Seite des Verteilers angeordnet ist, wobei das zweite Paar distalster Auslässe einen zweiten äußersten Auslass (37) und einen zweiten vorletzten Auslass (36) umfasst,
wobei der innerste Auslass ein mittlerer Auslass (19) ist, der über einer mittigen Fahrlinie (T-T) des Streuers (100) angeordnet ist,
das erste Paar innerer Auslässe (17/18), das zwischen dem ersten Paar distalster Auslässe (1/2) und dem mittleren Auslass (19) angeordnet ist,
ein zweites Paar innerer Auslässe (20/21), das zwischen dem zweiten Paar distalster Auslässe (36/37) und dem mittleren Auslass (19) angeordnet ist; und
die Vielzahl von Luftleitungen (82a-82r) die erste und die zweite Vielzahl von Schleusen (55a-55r) mit der Vielzahl von Auslässen (1-37) zum Befördern des teilchenförmigen Materials in dem Luftstrom mit der Vielzahl von Auslässen verbindet, wobei die erste Luftleitung (82a, 82r) umfasst
eine erste sich am weitesten nach außen erstreckende Luftleitung (82a), die eine erste am weitesten nach außen zuführende Schleuse (55a), die unter der ersten Vielzahl von Schleusen angeordnet ist, mit dem ersten Paar distalster Auslässe (1/2) verbindet,
die erste am weitesten außen zuführende Schleuse (55a), die der ersten sich am weitesten nach außen erstreckenden Luftleitung (82a) erste 1,5 Einheiten des teilchenförmigen Materials zuführt, wobei die erste sich am weitesten nach außen erstreckende Luftleitung konfiguriert ist, um ein Drittel der ersten 1,5 Einheiten des teilchenförmigen Materials zu dem ersten äußersten Auslass (1) und zwei Drittel der ersten 1,5 Einheiten des teilchenförmigen Materials zu dem ersten vorletzten Auslass (2) zu befördern,
eine zweite sich am weitesten nach außen erstreckende Luftleitung (82r), die eine zweite am weitesten nach außen zuführende Schleuse (55r), die in der zweiten Vielzahl von Schleusen angeordnet ist, mit dem zweiten Paar distalster Auslässe (36/37) verbindet,
die zweite am weitesten außen zuführende Schleuse, die zweite 1,5 Einheiten des teilchenförmigen Materials der zweiten am weitesten nach außen verlaufenden Luftleitung zuführt, wobei die zweite am weitesten nach außen verlaufende Luftleitung konfiguriert ist, um ein Drittel der zweiten 1,5 Einheiten des teilchenförmigen Materials zu dem zweiten äußersten Auslass (37)
und zwei Drittel der zweiten 1,5 Einheiten des teilchenförmigen Materials zu dem zweiten vorletzten Auslass (36) zu befördern, wobei die zweite Luftleitung (82i, 82j) umfasst
eine erste sich mittig erstreckende Luftleitung (82i), die eine erste mittlere zuführende Schleuse (55i), die in der ersten Vielzahl von Schleusen angeordnet ist, mit dem mittleren Auslass (19) und dem ersten Paar innerer Auslässe (17/18) verbindet,
die erste mittlere zuführende Schleuse, die erste 2,5 Einheiten des teilchenförmigen Materials der ersten sich mittig erstreckenden Luftleitung (82i) zuführt, wobei die erste sich mittig erstreckende Luftleitung konfiguriert ist, um ein Fünftel der ersten 2,5 Einheiten des teilchenförmigen Materials zu dem mittleren Auslass (19) und zwei Fünftel der ersten 2,5 Einheiten des teilchenförmigen Materials zu jedem Auslass des ersten Paares von inneren Auslässen (17/18) zu befördern, und
eine zweite sich mittig erstreckende Luftleitung (82j), die eine zweite mittlere zuführende Schleuse, die in der zweiten Vielzahl von Schleusen (55j) angeordnet ist, mit dem mittleren Auslass und dem zweiten Paar innerer Auslässe (20/21) verbindet,
die zweite mittlere zuführende Schleuse, die zweite 2,5 Einheiten des teilchenförmigen Materials der zweiten sich mittig erstreckenden Luftleitung zuführt, wobei die zweite sich mittig erstreckende Luftleitung konfiguriert ist, um ein Fünftel der zweiten 2,5 Einheiten des teilchenförmigen Materials zu dem mittleren Auslass (19) und zwei Fünftel der zweiten 2,5 Einheiten des teilchenförmigen Materials zu jedem Auslass des zweiten Paars innerer Auslässe (20/21) zu befördern.

9. Streuer (100) nach Anspruch 8, wobei der Ausleger (80) eine Spannweite von mehr als etwa 18,5 Metern (60 Fuß) aufweist.

10. Streuer (100) nach Anspruch 8, wobei der Ausleger (80) eine Spannweite zwischen etwa 24,5 Metern und 30,5 Metern (80 Fuß und 100 Fuß) aufweist.

11. Streuer (100) nach einem der Ansprüche 8 bis 10, wobei das pneumatische Gestänge (80) ferner ein Gebläse (82) in Fluidverbindung mit der Vielzahl von Luftleitungen (82a-82r) zum Bereitstellen des Luftstroms in der Vielzahl von Luftleitungen umfasst.

12. Streuer (100) nach einem der Ansprüche 8 bis 11, wobei die Vielzahl von Auslässen (1-37) ferner mindestens ein erstes Paar anderer Auslässe (3/4, 5/6, 7/8, 9/10, 11/12, 13/14, 15/16), angeordnet auf der ersten Seite des Streuers, und mindestens ein zweites Paar andere Auslässe (22/23, 24/25, 26/27, 28/29, 30/31, 32/33, 34/35), angeordnet auf der zweiten Seite des Streuers, umfasst.

13. Streuer (100) nach Anspruch 12, wobei das erste Paar innerer Auslässe (17/18) zwischen dem mindestens einen ersten Paar anderer Auslässe (3/4, 5/6, 7/8, 9/10, 11/12, 13/14, 15/16) und dem mittleren Auslass (19) angeordnet ist und das zweite Paar innerer Auslässe (20/21) zwischen dem mindestens einen zweiten Paar anderer Auslässe (22/23, 24/25, 26/27, 28/29, 30/31, 32/33, 34/35) und dem mittleren Auslass (19) angeordnet ist.

14. Streuer (100) nach einem der Ansprüche 8 bis 13, wobei die erste und die zweite Vielzahl von Schleusen (55a-55r) zusammen insgesamt mindestens 16 Schleusen umfassen und die Vielzahl von Auslässen (1-37) insgesamt mindestens 33 Auslässe umfasst.

15. Streuer (100) nach einem der Ansprüche 8 bis 13, wobei die erste und die zweite Vielzahl von Schleusen (55a-55r) zusammen insgesamt 18 Schleusen umfassen und die Vielzahl von Auslässen insgesamt 37 Auslässe umfasst.

16. Streuer (100) nach einem der Ansprüche 8 bis 15, wobei die ersten und zweiten Dosierelemente unabhängig voneinander steuerbar sind.

17. Streuer (100) nach einem der Ansprüche 8 bis 16, wobei die Dosierelemente Endlosbänder (56a-56d) oder Sätze von Dosierwalzen (51,52) oder eine Kombination aus mindestens einem Endlosband und mindestens einem Satz von Dosierwalzen umfassen.

18. Streuer (100) nach einem der Ansprüche 8 bis 17, wobei jede Schleuse (55a-55r) das teilchenförmige Material mindestens zwei der Vielzahl von Auslässen (1-37) zuführt.

19. Streuer (100) nach einem der Ansprüche 8 bis 18, wobei:
die erste sich am weitesten nach außen erstreckende Luftleitung (82a) den ersten Strömungsteiler (87a) umfasst, um die ersten 1,5 Einheiten des teilchenförmigen Materials zwischen dem ersten äußersten Auslass und dem ersten vorletzten Auslass aufzuteilen;
die zweite sich am weitesten nach außen erstreckende Luftleitung (82r) den ersten Strömungsteiler umfasst, um die zweiten 1,5 Einheiten des teilchenförmigen Materials zwischen dem zweiten äußersten Auslass und dem zweiten vorletzten Auslass aufzuteilen;
die erste sich mittig erstreckende Luftleitung (82i) den zweiten Strömungsteiler (87a) umfasst, um die ersten 2,5 Einheiten des teilchenförmigen Materials zwischen dem mittleren Auslass (19) und dem ersten Paar innerer Auslässe (17/18) aufzuteilen, und den dritten Strömungsteiler (87c,d) umfasst, um jedem der Auslässe des ersten Paars innerer Auslässe (17/18) die jeweiligen zwei Fünftel der ersten 2,5 Einheiten bereitzustellen,
die zweite sich mittig erstreckende Luftleitung (82j) den zweiten Strömungsteiler (87b) umfasst, um die zweiten 2,5 Einheiten des teilchenförmigen Materials zwischen dem mittleren Auslass (19) und dem zweiten Paar innerer Auslässe (20/21) aufzuteilen, und den dritten Strömungsteiler (87e,f) umfasst, um jedem der Auslässe des zweiten Paars innerer Auslässe (20/21) die jeweiligen zwei Fünftel der zweiten 2,5 Einheiten bereitzustellen.

20. Streuer (100) nach Anspruch 19, wobei:
die erste sich mittig erstreckende Luftleitung (92i) sich aufteilt in: eine erste Zweigluftleitung (98a) in Fluidverbindung mit dem mittleren Auslass (119); eine erste innere Luftleitung (92ii) in Fluidverbindung mit einem (118) der Auslässe des ersten Paars innerer Auslässe; und, eine zweite innere Luftleitung (92iii) in Fluidverbindung mit dem anderen (117) der Auslässe des ersten Paars innerer Auslässe, wobei:
der zweite Strömungsteiler (97a) ein Fünftel des teilchenförmigen Materials aus der ersten sich mittig erstreckenden Luftleitung (92i) in die erste Zweigluftleitung (98a) ableitet; und,
der dritte Strömungsteiler (97c) zwei Fünftel des teilchenförmigen Materials aus der ersten sich mittig erstreckenden Luftleitung (92i) in jede der ersten und zweiten inneren Luftleitungen (92ii, 92iii) ableitet, wobei die erste innere Luftleitung und die zweite innere Luftleitung beide Biegungen aufweisen, sodass sich die erste und zweite innere Luftleitung quer erstrecken,
und der dritte Strömungsteiler vor den Biegungen in der ersten und der zweiten inneren Luftleitung angeordnet ist; und,
die zweite sich mittig erstreckende Luftleitung (92j) sich aufteilt in: eine zweite Zweigluftleitung (98b) in Fluidverbindung mit dem mittleren Auslass (19); eine erste innere Luftleitung (92jj) in Fluidverbindung mit einem (120) der Auslässe des zweiten Paars innerer Auslässe; und eine zweite innere Luftleitung (92jjj) in Fluidverbindung mit dem anderen (121) der Auslässe des zweiten Paars innerer Auslässe, wobei:
der zweite Strömungsteiler (97b) ein Fünftel des teilchenförmigen Materials aus der zweiten sich mittig erstreckenden Luftleitung (92j) in die zweite Zweigluftleitung (98b) ableitet; und,
der dritte Strömungsteiler (97e) zwei Fünftel des teilchenförmigen Materials aus der zweiten sich mittig erstreckenden Luftleitung (92j) in jede der ersten und der zweiten inneren Luftleitung (92jj, 92jjj) ableitet, wobei die erste innere Luftleitung und die zweite innere Luftleitung beide Biegungen aufweisen, sodass sich die erste und zweite innere Luftleitung quer erstrecken,
und der dritte Strömungsteiler (97e) vor den Biegungen in der ersten und der zweiten Innenluftleitung angeordnet ist.

## Revendications

1. Épandeur à rampe pneumatique (100) permettant d'épandre un matériau particulaire dans les inter-rangées entre des rangées de culture sur un champ, l'épandeur comprenant :
une trémie (40) pour contenir le matériau particulaire ;
un dispositif de dosage (50) conçu pour recevoir le matériau particulaire provenant de la trémie ;
une pluralité de sorties espacées transversalement sur une rampe dans une direction sensiblement non parallèle à une direction de déplacement de l'épandeur (100) et conçues pour recevoir le matériau particulaire provenant du dispositif de dosage (50) et pour distribuer le matériau particulaire aux inter-rangées, la pluralité de sorties (1-37) comprenant
une paire de sorties les plus distales (1/2, 36/37) par rapport au dispositif de dosage, la paire de sorties les plus distales (1/2, 36/37) comprenant une sortie la plus externe (1,37) et une avant-dernière sortie (2, 36),
une sortie la plus interne (19) par rapport au dispositif de dosage, et
une paire de sorties intérieures (17/18, 20/21) située sur la rampe entre la paire de sorties les plus distales (1/2, 36/37) et la sortie la plus interne (19) ; et
une pluralité de conduites d'air (82a-82r) reliant le dispositif de dosage (50) à la pluralité de sorties (1-37) pour acheminer le matériau particulaire dans un flux d'air vers la pluralité de sorties,
**caractérisé par**
la pluralité de conduites d'air comprenant
une première conduite d'air (82a, 82r) reliant le dispositif de dosage à la paire de sorties les plus distales (1/2, 36/37), le dispositif de dosage fournissant 1,5 unité de matériau particulaire à la première conduite d'air, la première conduite d'air étant conçue pour acheminer un tiers des 1,5 unité de matériau particulaire vers la sortie la plus externe (1,37) et deux tiers des 1,5 unité de matériau particulaire vers l'avant-dernière sortie (2,36),
une seconde conduite d'air (82i, 82j) reliant le dispositif de dosage (50) à la sortie la plus interne (19) et à la paire de sorties intérieures (17/18, 20/21), le dispositif de dosage (50) fournissant 2,5 unités de matériau particulaire à la seconde conduite d'air, la seconde conduite d'air étant conçue pour acheminer un cinquième des 2,5 unités de matériau particulaire vers la sortie la plus interne (19) et deux cinquièmes des 2,5 unités de matériau particulaire vers chaque sortie de la paire de sorties intérieures (17/18,20/21).

2. Épandeur (100) selon la revendication 1, dans lequel la sortie la plus interne (19) est située au-dessus d'une ligne de déplacement centrale (T-T) de l'épandeur.

3. Épandeur (100) selon la revendication 1 ou la revendication 2, dans lequel la pluralité de sorties (1-37) comprend en outre au moins une paire d'autres sorties (3/4, 5/6, 7/8, 9/10, 11/12, 13/14, 15/16, 22/23, 24/25, 26/27, 28/29, 30/31, 32/33, 34/35) située sur la rampe (80) entre la paire de sorties les plus distales (1/2, 36/37) et la paire de sorties intérieures (17/18, 20/21), et l'au moins une paire d'autres sorties est alimentée en matériau particulaire par l'intermédiaire d'au moins une autre conduite d'air (82b-82h, 82k-82q).

4. Épandeur (100) selon l'une quelconque des revendications 1 à 3, dans lequel la rampe pneumatique (80) comprend en outre une soufflante (82) en communication fluidique avec la pluralité de conduites d'air (82a-82r) pour fournir le flux d'air dans la pluralité de conduites d'air (82a-82r).

5. Épandeur (100) selon l'une quelconque des revendications 1 à 4, dans lequel le dispositif de dosage (50) comprend un ou plusieurs éléments de dosage, et le ou les éléments de dosage comprennent une courroie sans fin (56a-56d) ou un ensemble de rouleaux doseurs (51,52).

6. Épandeur (100) selon l'une quelconque des revendications 1 à 5, dans lequel :
la première conduite d'air (82a, 82r) comprend un premier diviseur de débit (87a) pour diviser l'1,5 unité de matériau particulaire entre la sortie la plus externe (1, 37) et l'avant-dernière sortie (2, 36) ;
et
la seconde conduite d'air (82i, 82j) comprend un deuxième diviseur de débit (87a, 87b) pour diviser les 2,5 unités de matériau particulaire entre la sortie la plus interne (19) et la paire de sorties intérieures (17/18, 20/21) et comprend un troisième diviseur de débit (87c/d, 87 e/f) pour fournir à chacune des sorties de la paire de sorties intérieures les deux cinquièmes respectifs des 2,5 unités.

7. Épandeur (100) selon la revendication 6, dans lequel :
la paire de sorties intérieures (117/118, 120/121) comprend une première sortie intérieure (118, 120) et une seconde sortie intérieure (117, 121) ;
la première sortie intérieure (118, 120) est située sur une première conduite d'air intérieure (92ii, 92jj), la première conduite d'air intérieure présentant un premier coude de sorte que la première conduite d'air intérieure s'étende transversalement, la première sortie intérieure (118, 120) étant située après le premier coude ;
la seconde sortie intérieure (117, 121) est située sur une seconde conduite d'air intérieure (92iii, 92jjj), séparée de la première conduite d'air intérieure, la seconde conduite d'air intérieure présentant un second coude de sorte que la seconde conduite d'air intérieure s'étende transversalement, la seconde sortie intérieure (117, 121) située après le second coude ; et
le troisième diviseur de débit (97c, 97e) divise le matériau particulaire entre les première et seconde conduites d'air intérieures (92ii, 92iii, 92jj, 92jjj), le troisième diviseur de débit (97c, 97e) étant situé avant les premier et second coudes.

8. Épandeur (100) à rampe pneumatique selon la revendication 1, dans lequel :
le dispositif de dosage (50) partitionne le matériau particulaire, et le dispositif de dosage comprend
des premier et second éléments de dosage, chaque élément de dosage recevant le matériau particulaire provenant de la trémie (40), et
des première et seconde boîtes d'écluses (53, 54) la première boîte d'écluses (53) présentant, à l'intérieur de celle-ci, une première pluralité d'écluses (55a, 55b, 55c, 55d, 55e, 55f, 55g, 55h, 55i) qui reçoivent le matériau particulaire provenant du premier élément de dosage, la seconde boîte d'écluses (54) présentant, à l'intérieur de celle-ci, une seconde pluralité d'écluses (55j, 55k, 55I, 55m, 55m, 55o, 55p, 55q, 55r) qui reçoivent le matériau particulaire provenant du second élément de dosage ;
la rampe (80) est extensible transversalement dans des directions transversales opposées de manière distale par rapport au dispositif de dosage (50) de façon sensiblement non parallèle à la direction de déplacement de l'épandeur (100) et sensiblement non perpendiculaire au champ ;
la pluralité de sorties (1-37) comprend
la première paire de sorties les plus distales (1/2) située sur un premier côté de l'épandeur, la première paire de sorties les plus distales comprenant la première sortie la plus externe (1) et la première avant-dernière sortie (2),
une seconde paire de sorties les plus distales (36/37) située sur un second côté de l'épandeur, la seconde paire de sorties les plus distales comprenant une seconde sortie la plus externe (37) et une seconde avant-dernière sortie (36),
la sortie la plus interne étant une sortie centrale (19) située au-dessus d'une ligne de déplacement centrale (T-T) de l'épandeur (100),
la première paire de sorties intérieures (17/18) située entre la première paire de sorties les plus distales (1/2) et la sortie centrale (19),
une seconde paire de sorties intérieures (20/21) située entre la seconde paire de sorties les plus distales (36/37) et la sortie centrale (19) ; et
la pluralité de conduites d'air (82a-82r) relie les première et seconde pluralités d'écluses (55a-55r) à la pluralité de sorties (1-37) pour acheminer le matériau particulaire dans le flux d'air vers la pluralité de sorties, la première conduite d'air (82a, 82r) comprenant
une première conduite d'air s'étendant le plus à l'extérieur (82a) reliant une première écluse d'alimentation la plus externe (55a), située dans la première pluralité d'écluses, à la première paire de sorties les plus distales (1/2),
la première écluse d'alimentation la plus externe (55a) fournissant une première 1,5 unité de matériau particulaire à la première conduite d'air s'étendant le plus à l'extérieur (82a), la première conduite d'air s'étendant le plus à l'extérieur étant conçue pour acheminer un tiers de la première 1,5 unité de matériau particulaire vers la première sortie la plus externe (1) et deux tiers de la première 1,5 unité de matériau particulaire vers la première avant-dernière sortie (2),
une seconde conduite d'air s'étendant le plus à l'extérieur (82r) reliant une seconde écluse d'alimentation la plus externe (55r), située dans la seconde pluralité d'écluses, à la seconde paire de sorties les plus distales (36/37),
la seconde écluse d'alimentation la plus externe fournissant une seconde 1,5 unité de matériau particulaire à la seconde conduite d'air s'étendant le plus à l'extérieur, la seconde conduite d'air s'étendant le plus à l'extérieur étant conçue pour acheminer un tiers de la seconde 1,5 unité de matériau particulaire vers la seconde sortie la plus externe (37)
et deux tiers de la seconde 1,5 unité de matériau particulaire vers la seconde avant-dernière sortie (36), la seconde conduite d'air (82i, 82j) comprenant
une première conduite d'air s'étendant centralement (82i) reliant une première écluse d'alimentation centrale (55i), située dans la première pluralité d'écluses, à la sortie centrale (19) et à la première paire de sorties intérieures (17/18),
la première écluse d'alimentation centrale fournissant des premières 2,5 unités de matériau particulaire à la première conduite d'air s'étendant centralement (82i), la première conduite d'air s'étendant centralement étant conçue pour acheminer un cinquième des premières 2,5 unités de matériau particulaire vers la sortie centrale (19) et deux cinquièmes des premières 2,5 unités de matériau particulaire vers chaque sortie de la première paire de sorties intérieures (17/18), et
une seconde conduite d'air s'étendant centralement (82j) reliant une seconde écluse d'alimentation centrale, située dans la seconde pluralité d'écluses (55j), à la sortie centrale et à la seconde paire de sorties intérieures (20/21),
la seconde écluse d'alimentation centrale fournissant des secondes 2,5 unités de matériau particulaire à la seconde conduite d'air s'étendant centralement, la seconde conduite d'air s'étendant centralement étant conçue pour acheminer un cinquième des secondes 2,5 unités de matériau particulaire vers la sortie centrale (19) et deux cinquièmes des secondes 2,5 unités de matériau particulaire vers chaque sortie de la seconde paire de sorties intérieures (20/21).

9. Épandeur (100) selon la revendication 8, dans lequel la rampe (80) a une envergure supérieure à environ 18,5 mètres (60 pieds).

10. Épandeur (100) selon la revendication 8, dans lequel la rampe (80) présente une envergure comprise entre environ 24,5 mètres et 30,5 mètres (80 pieds et 100 pieds).

11. Épandeur (100) selon l'une quelconque des revendications 8 à 10, dans lequel la rampe pneumatique (80) comprend en outre une soufflante (82) en communication fluidique avec la pluralité de conduites d'air (82a-82r) pour fournir le flux d'air dans la pluralité de conduites d'air.

12. Épandeur (100) selon l'une quelconque des revendications 8 à 11, dans lequel la pluralité de sorties (1-37) comprend en outre au moins une première paire d'autres sorties (3/4, 5/6, 7/8, 9/10, 11/12, 13/14, 15/16) située sur le premier côté de l'épandeur et au moins une seconde paire d'autres sorties (22/23, 24/25, 26/27, 28/29, 30/31, 32/33, 34/35) située sur le second côté de l'épandeur.

13. Épandeur (100) selon la revendication 12, dans lequel la première paire de sorties intérieures (17/18) est située entre l'au moins une première paire d'autres sorties (3/4, 5/6, 7/8, 9/10, 11/12, 13/14, 15/16) et la sortie centrale (19) et la seconde paire de sorties intérieures (20/21) est située entre l'au moins une seconde paire d'autres sorties (22/23, 24/25, 26/27, 28/29, 30/31, 32/33, 34/35) et la sortie centrale (19).

14. Épandeur (100) selon l'une quelconque des revendications 8 à 13, dans lequel les première et seconde pluralités d'écluses (55a-55r) comprennent ensemble un total d'au moins 16 écluses, et la pluralité de sorties (1-37) comprend un total d'au moins 33 sorties.

15. Épandeur (100) selon l'une quelconque des revendications 8 à 13, dans lequel les première et seconde pluralités d'écluses (55a-55r) comprennent ensemble un total de 18 écluses, et la pluralité de sorties comprend un total de 37 sorties.

16. Épandeur (100) selon l'une quelconque des revendications 8 à 15, dans lequel les premier et second éléments de dosage peuvent être commandés indépendamment.

17. Épandeur (100) selon l'une quelconque des revendications 8 à 16, dans lequel les éléments de dosage comprennent des courroies sans fin (56a-56d) ou des ensembles de rouleaux doseurs (51,52) ou une combinaison d'au moins une courroie sans fin et d'au moins un ensemble de rouleaux doseurs.

18. Épandeur (100) selon l'une quelconque des revendications 8 à 17, dans lequel chaque écluse (55a-55r) fournit le matériau particulaire à au moins deux de la pluralité de sorties (1-37).

19. Épandeur (100) selon l'une quelconque des revendications 8 à 18, dans lequel :
la première conduite d'air s'étendant le plus à l'extérieur (82a) comprend le premier diviseur de débit (87a) pour diviser la première 1,5 unité de matériau particulaire entre la première sortie la plus externe et la première avant-dernière sortie ;
la seconde conduite d'air s'étendant le plus à l'extérieur (82r) comprend le premier diviseur de débit pour diviser la seconde 1,5 unité de matériau particulaire entre la seconde sortie la plus externe et la seconde avant-dernière sortie ;
la première conduite d'air s'étendant centralement (82i) comprend le deuxième diviseur de débit (87a) pour diviser les premières 2,5 unités de matériau particulaire entre la sortie centrale (19) et la première paire de sorties intérieures (17/18), et comprend le troisième diviseur de débit (87c,d) pour fournir à chacune des sorties de la première paire de sorties intérieures (17/18) les deux cinquièmes respectifs des premières 2,5 unités,
la seconde conduite d'air s'étendant centralement (82j) comprend le deuxième diviseur de débit (87b) pour diviser les secondes 2,5 unités de matériau particulaire entre la sortie centrale (19) et la seconde paire de sorties intérieures (20/21), et comprend le troisième diviseur de débit (87e,f) pour fournir à chacune des sorties de la seconde paire de sorties intérieures (20/21) les deux cinquièmes respectifs des secondes 2,5 unités.

20. Épandeur (100) selon la revendication 19, dans lequel :
la première conduite d'air s'étendant centralement (92i) se divise en : une première conduite d'air d'embranchement (98a) en communication fluidique avec la sortie centrale (119) ; une première conduite d'air intérieure (92ii) en communication fluidique avec l'une (118) des sorties de la première paire de sorties intérieures ; et une seconde conduite d'air intérieure (92iii) en communication fluidique avec l'autre (117) des sorties de la première paire de sorties intérieures, dans lequel :
le deuxième diviseur de débit (97a) dévie un cinquième du matériau particulaire de la première conduite d'air s'étendant centralement (92i) dans la première conduite d'air d'embranchement (98a) ; et
le troisième diviseur de débit (97c) dévie deux cinquièmes du matériau particulaire provenant de la première conduite d'air s'étendant centralement (92i) dans chacune des première et seconde conduites d'air intérieures (92ii, 92iii), moyennant quoi la première conduite d'air intérieure et la seconde conduite d'air intérieure présentent toutes deux des coudes de sorte que les première et seconde conduites d'air intérieures s'étendent transversalement,
et le troisième diviseur de débit est situé avant les coudes dans les première et seconde conduites d'air intérieures ; et
la seconde conduite d'air s'étendant centralement (92j) se divise en : une seconde conduite d'air d'embranchement (98b) en communication fluidique avec la sortie centrale (19) ; une première conduite d'air intérieure (92jj) en communication fluidique avec l'une (120) des sorties de la seconde paire de sorties intérieures ; et une seconde conduite d'air intérieure (92jjj) en communication fluidique avec l'autre (121) des sorties de la seconde paire de sorties intérieures, dans lequel :
le deuxième diviseur de débit (97b) dévie un cinquième du matériau particulaire de la seconde conduite d'air s'étendant centralement (92j) dans la seconde conduite d'air d'embranchement (98b) ; et
le troisième diviseur de débit (97e) dévie deux cinquièmes du matériau particulaire provenant de la seconde conduite d'air s'étendant centralement (92j) dans chacune des première et seconde conduites d'air intérieures (92jj, 92jjj), moyennant quoi la première conduite d'air intérieure et la seconde conduite d'air intérieure présentent toutes deux des coudes de sorte que les première et seconde conduites d'air intérieures s'étendent transversalement,
et le troisième diviseur de débit (97e) est situé avant les coudes dans les première et seconde conduites d'air intérieures.
